# EUROPEAN PATENT APPLICATION

(11) **EP 1 089 241 A2**
(43) Date of publication of application: **04.04.2001**
(21) Application number: 00118233.6
(22) Date of filing: 01.09.2000
(51) Int. Cl.: G07F 17/16, G06F 17/60

(54) **Digital data copyright protection system**

(30) Priority: 01.09.1999 JP 24792399; 01.09.1999 JP 24792099; 13.09.1999 JP 25858299
(71) Applicant: MATSUSHITA ELECTRIC INDUSTRIAL CO., LTD., Kadoma-shi, Osaka-fu 571-8501 (JP)
(72) Inventor: Tagawa, Kenji, Katano-shi, Osaka (JP); Kozuka, Masayuki, Arcadia, CA 91008 (US); Okamoto, Ryuichi, Studio City, CA 91604 (US); Nonomura, Tomoyuki, Osaka (JP); Matsushima, Hideki, Studio City, CA 91604 (US); Tokuda, Katsumi, Toluca Lake, CA 91604 (US); Otani, Yukako, Moriguchi-shi, Osaka (JP); Yamamoto, Masaya, Katano-shi, Osaka (JP); Inoue, Mitsuhiro, Studio City, CA 91604 (US)
(74) Representative: Lang, Johannes, Dipl.-Ing.

(57) **Abstract**

A digital data copyright protection system especially for unencrypted data to protect a copyright thereof while charging a user appropriate royalties therefor. In the digital data copyright protection system, super distribution data is received by a super distribution data receiving unit (401) for storage in a super distribution data storage region (402). Right management information is acquired by an RMI acquiring unit (403) for storage in an RMI storage region (404). Unencrypted data is read by a data reading unit (406), encrypted by a data encrypting unit 408 with a key extracted by a content key extracting unit 405, and then is provided with the right management information in an RMI adding unit (409) for storage. Once the data is through with a purchase processing in a purchase processing unit (412), the data is decrypted by the content decrypting unit (414), and is played back by a reproduction control unit (415) and a speaker (416), or provided with an ID stored in a user ID storage region (418) by a distributor ID adding unit (411) for output.

## Description

### BACKGROUND OF THE INVENTION

### Field of the Invention

The present invention relates to digital data copyright protection systems and, more specifically, to a system for protecting a copyright of music data while charging a user appropriate royalties therefor.

### Description of the Background Art

In recent years, CDs (Compact Disc) have been popular media for music. Such CD is easy to carry, and thus people feel free to hand their CDs to others to let them try. Such hand-to-hand music distribution often contributes to mega hit. Problem herein is that the CD is hardly protected against piracy, that is, unauthorized copying. Further, such CD is copied with ease into a CD-R (Compact Disc Recordable) which recently became commercially available. MDs (Mini Disc) are also becoming popular as media for music data previously recorded in the CDs. Music data is thus easily copied thereby, and if the music data is shared beyond the scope of the copyright law, the copyright holders suffer.

In order to prevent such easy copying, disclosed in Japanese Patent Laid-Open Publication No. 9-34841 (97-34841) is a conventional system for encrypting CDs before distribution, transmitting a decryption key over a network, and billing therefor. As such, online music distribution and billing over the network is quickly becoming popular.

With such conventional system, however, online music distribution and billing is personalized one-on-one, and thus music data is not expansively distributed among users as with the hand-to-and distribution workable for CDs. So far, facilitating the distribution of music data has not been an issue for online music distribution.

### SUMMARY OF THE INVENTION

Therefore, an object of the present invention is to provide a copyright protection system especially for online music distribution, implementing protection for a copyright of music data by charging appropriate royalties therefor, and facilitating the distribution of the music data.

The present invention has the following features to attain the object above.

A first aspect of the present invention is directed to a digital data copyright protection system for charging a user appropriate royalties while protecting a copyright of digital data, the system comprising:
a content distribution unit operable to distribute super distribution data including the digital data over a network:
a plurality of digital data recording and reproducing apparatuses interconnected via the network, each capable of storing the super distribution data received from the content distribution unit, reproducing the digital data, and distributing the super distribution data stored therein to the others; and
a billing processing unit operable to communicate with the digital data recording and reproducing apparatuses over the network, and go through a billing processing for charging the royalties, wherein
the digital data recording and reproducing apparatuses each
   communicate, prior to reproducing the digital data, with the billing processing unit to go through a purchase processing to be ready for the billing processing when receiving the super distribution data from the content distribution unit or the other digital data recording and reproducing apparatuses over the network, and
   add, prior to distribution, a distributor ID to the super distribution data received from the content distribution unit or the other digital data recording and reproducing apparatuses over the network, wherein,
when the super distribution data subjected to the billing processing is provided with the distributor ID, the billing processing unit goes through a bonus processing with respect to a user identified by the distributor ID.

As described above, in the first aspect, provided is a digital data copyright protection system capable of protecting a copyright while charging a user appropriate royalties, and benefiting a copyright holder to a greater extent by using bonus to lure the user to distribute the data.

A second aspect of the present invention is directed to a digital data recording and reproducing apparatus being capable of storing super distribution data including a content which is digital data encrypted under a first system and right management information having a content key used for the first system, and of reproducing the content after going through a purchase processing to be ready for a billing processing by communicating with a billing processing unit connected via a network, the apparatus comprising:
a super distribution data receiving unit operable to externally receive the super distribution data;
a super distribution data storage unit operable to store the super distribution data;
a purchase processing unit operable to go through, in response to a user's instruction, the purchase processing to reproduce the content included in the super distribution data stored in the super distribution data storage unit;
a data extracting unit operable to extract the super distribution data from the super distribution data storage unit;
a content decrypting unit operable to decrypt, when the purchase processing is carried out, the super distribution data stored in the super distribution data storage unit under the first system, and extract the content;
a reproduction unit operable to reproduce the content extracted by the content decrypting unit; and
a distributor ID unit operable to encrypt a first user ID which is identification information unique to the apparatus, and add the encrypted first user ID to the super distribution data extracted by the data extracting unit for external output.

As described above, in the second aspect, provided is a digital data recording and reproducing apparatus capable of charging a user appropriate royalties and accordingly protecting a copyright by distributing super distribution data including content such as music.

A third aspect of the present invention is directed to a billing processing unit operable to store super distribution data, and from a digital data recording and reproducing apparatus capable of reproducing a content after a billing processing, receive, over a network, billing control information corresponding to the super distribution data, a distributor ID indicating who has distributed the super distribution data, and a transmitter ID corresponding to the digital data recording and reproducing apparatus, the billing processing unit comprising:
a billing processing information receiving unit operable to receive the billing control information and the distributor ID;
a transmitter authorizing unit operable to receive the transmitter ID and identify a transmitter;
a billing processing unit operable to carry out, according to the billing control information received by the billing processing information receiving unit, the billing processing with respect to the transmitter identified by the transmitter authorizing unit; and
a bonus processing unit operable to carry out a bonus processing for a distributor identified by the distributor ID received by the billing processing information receiving unit.

As described above, in the third aspect, provided is a billing processing unit capable of protecting a copyright while charging a user appropriate royalties, and benefiting a copyright holder to a greater extent by offering a user identified by a distributor ID bonus to lure him/her to distribute the data.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram showing the structure of a digital data copyright protection system according to a first embodiment of the present invention;
FIG. 2 is a schematic diagram showing the configuration of first super distribution data;
FIG. 3 is a schematic diagram showing the configuration of second super distribution data;
FIG. 4 is a schematic diagram specifically showing how a user distributes, to other users, super distribution data which he/she had received under the present copyright protection system;
FIG. 5 is a block diagram showing the structure of a digital data recording and reproducing apparatus of the first embodiment;
FIG. 6 is a schematic diagram showing a first digital data recording and reproducing apparatus 1011 implemented by a general computer;
FIG. 7 is a flowchart showing the operation of the digital data recording and reproducing apparatus for acquiring right management information;
FIG. 8 is a schematic diagram showing the structure of a right management information managing table;
FIG. 9 is a schematic diagram showing the structure of super distribution data management information 1605;
FIG. 10 is a flowchart showing the operation of the digital data recording and reproducing apparatus for reproduction;
FIG. 11 is a block diagram showing the detailed structure of a distributor ID adding unit 411;
FIG. 12 is a block diagram showing the detailed structure of a purchase processing unit 412;
FIG. 13 is a schematic diagram showing an example of billing processing information;
FIG. 14 is a flowchart showing the operation of the digital data recording and reproducing apparatus for purchase processing;
FIG. 15 is a block diagram showing the detailed structure of a billing processing unit 801;
FIG. 16 is a flowchart showing the operation of the billing processing unit 801 for the billing processing;
FIG. 17 is a block diagram showing the structure of a digital data recording and reproducing apparatus according to a second embodiment;
FIG. 18 is a diagram showing the structure of an SDAF package according to a third embodiment of the present invention;
FIGS. 19a to 19c are diagrams showing other structures of the SDAF packages;
FIG. 20 is a diagram showing how to split an SDAF title into SDAF packages;
FIG. 21 is a diagram showing an example of the SDAF package;
FIG. 22 is a diagram showing a header structure;
FIGS. 23 and 24 show source codes describing the header structure using the C++ language;
FIGS. 25a to 25c are diagrams showing how to define a CEL attribute table using a tag structure;
FIG. 26 is a diagram showing a correspondence between key pairs and CELs;
FIG. 27 shows source codes describing the key pair structure using the C++ language;
FIG. 28 is a diagram showing how to refer to the CEL from navigation data;
FIG. 29 is a diagram showing an example of the structure of the navigation data;
FIG. 30 is a diagram showing an another example of the structure of the navigation data;
FIG. 31 is a table showing specifications of MPEG2-AAC applied to an audio CEL;
FIG. 32 is a table showing specifications of JPEG applied to an image CEL;
FIG. 33 is a table showing specifications of MPEG-I frame applied to the image CEL;
FIG. 34 is a table showing specifications of PNG applied to the image CEL;
FIG. 35 is a table showing specifications of MPEG2 applied to a video CEL;
FIG. 36 is a diagram showing the structure of a time search map;
FIGS. 37, 38a, and 38b are a table and diagrams showing a header included in the time search map in detail;
FIG. 39 is a table showing each entry included in the time search map in detail;
FIG. 40 is a table showing an example of CEL redirectors;
FIGS. 41a to 41c are diagrams showing examples of how to distribute the SDAF package;
FIGS. 42a to 42c are diagrams showing examples of how to create the SDAF package;
FIG. 43 is an external view of a portable music player;
FIG. 44 is a block diagram showing an example of the structure of the data conversion unit; and
FIG. 45 is a block diagram showing another example of the structure of the data conversion unit.

### DESCRIPTION OF THE PREFERRED EMBODIMENTS

### (First Embodiment)

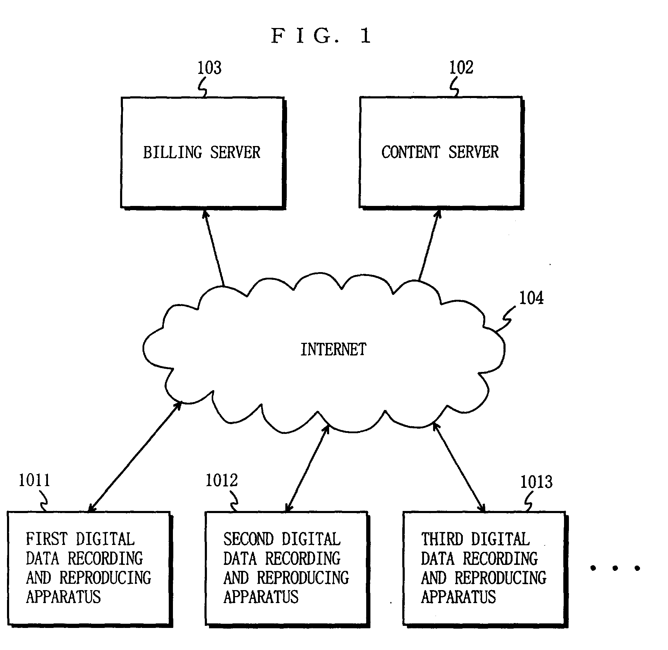

With reference to FIGS. 1, 2, and 3, described below is a digital data copyright protection system according to a first embodiment of the present invention. FIG. 1 is a diagram showing the structure of the digital data copyright protection system.

The digital data copyright protection system includes first to third digital data recording and reproducing apparatuses 1011 to 1013, a content server 102 for distributing digital data, and a billing server 103 for going through a billing processing. These are interconnected via the Internet 104. Herein, the Internet is not restrictive, and may be a telephone line, dedicated network, satellite broadcast network, or CATV network. The number of digital data recording and reproducing apparatuses is not an issue here.

In FIG. 1, the first to third digital data recording and reproducing apparatuses 1011 to 1013 are typified by personal computers connected to the Internet. A user receives digital data through the Internet or from media such as music CDs for reproduction on his/her digital recording and reproducing apparatus.

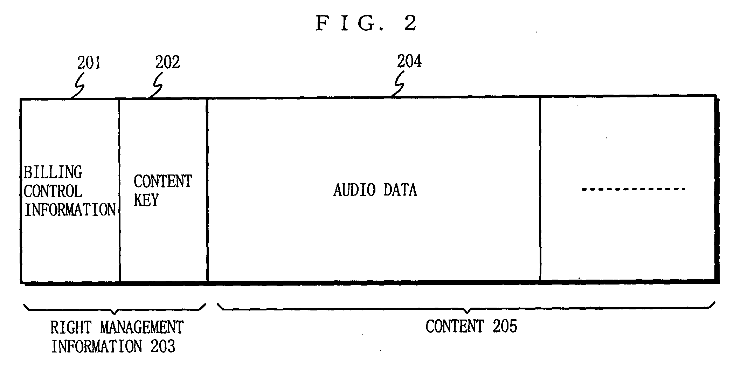

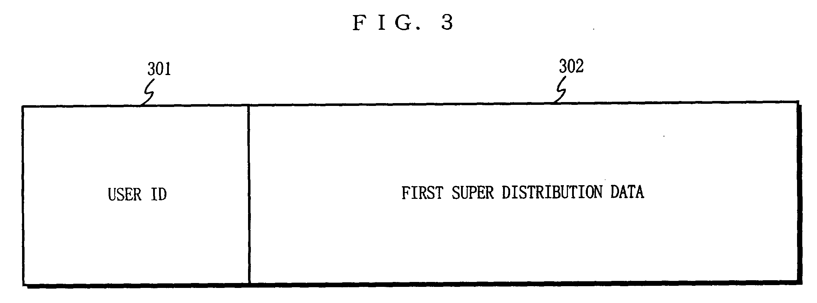

FIGS. 2 and 3 are diagrams exemplarily showing the configuration of the digital data distributed through the Internet. The digital data in FIG. 2 includes right management information 203 and a content 205. The right management information 203 includes billing control information 201 and a content key 202. The content 205 is composed of one or more pieces of audio data 204. Hereinafter, such configured digital data is referred to as first super distribution data.

The billing control information 201 includes information as to a bill for the content, availability for previewing, the number of previewing, and the like. The billing control information 201 may also include information as to a billing arrangement which is based on the number of listenings, i.e., for every listening or a predetermined number of listenings, and the number, for example. The content key 202 is used to encrypt and decrypt the content 205. The content 205 is previously encrypted by the content key 202.

The right management information 203 is previously encrypted under a predetermined encryption system with a key different from the content key 202. Such key is called a right management information key (not shown), and is typically stored in software operable in the first to third digital data recording and reproducing apparatuses 1011 to 1013. The software is installed by the user for use. Herein, the right management information key may encrypt and decrypt the information in hardware dedicated therefor.

The right management information key is stored in a region where no user is accessible with normal operation. Such region inaccessible by the user is hereinafter referred to as secured region. Here, the secured region is often provided in a built-in storage in a general computer device, but may be in dedicated hardware, storage, or storage medium.

The digital data in FIG. 3 includes a user ID 301 and first super distribution data 302 as shown in FIG. 2. Such configured data is hereinafter referred to as second super distribution data.

The user ID 301 in FIG. 3 indicates information for identifying the user having the digital data distributed to another. The user ID 301 is encrypted under a predetermined encryption system, and is uniquely provided to every user. The user ID 301 is stored in the above-described secured region, and may be composed of several user specific IDs. The specific user ID is generated at installation of such software as above in the copyright protection system, or provided from the billing server 103 or others over the network. Details about the possibility of the user ID 301 being composed of several specific user IDs are left for later description.

A CD (external recording medium 417, which is later described) in this embodiment includes a content (music data) and content identification information for identifying the content. The content identification information is typified by a code called ISRC (International Standard Recording Code) used to identify a music title.

The content recorded on the CD is presumably not encrypted. The CD herein may be an Enhanced-CD in which a region for music CD (CD-DA) and a CD-ROM region are combined. Further, the CD-ROM region therein may store the right management information 203 encrypted under a predetermined encryption system.

Described below is digital data distribution under the present copyright protection system. Assuming that, with the first digital data recording and reproducing apparatus 1011, a user *A* purchases and reproduces some digital data (typically music), and he/she finds himself/herself liking the data and decides to suggest a user *B* to purchase the data. In such case, the user *A* may store the digital data in a storage medium and hand it to the user *B*, or directly transmits the data via the Internet. This works well for both of them since the user *A* is not bothered to describe what the digital data is like (e.g., title of the music, name of the singer), and the user *B* merely receives the data from the user *A*. Afterward, the user *B* may also find himself/herself liking the music, and recommend it to another user *C*. If such wide-spreading digital data is billed for on the usage basis, copyright holders can enjoy benefits brought thereby. Basically, this copyright protection system is developed by taking such case into consideration.

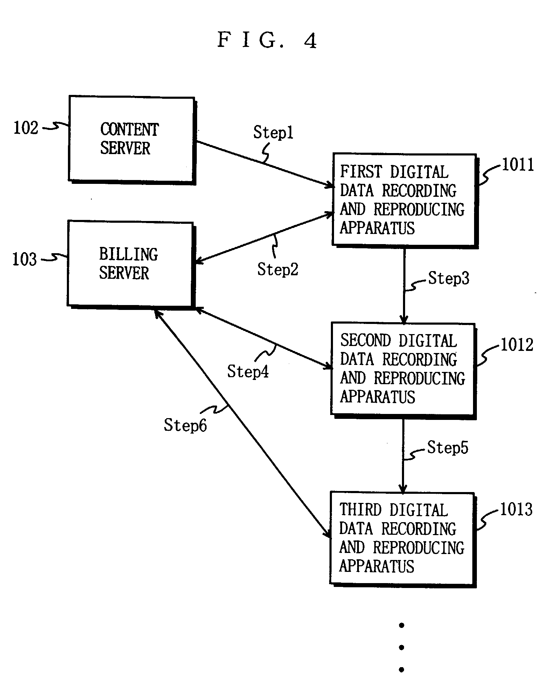

FIG. 4 is a diagram specifically showing the copyright protection system used for such case as above. In FIG. 4, with the first digital data recording and reproducing apparatus 1011, the user *A* presumably downloads music data from the content server 102 (Step 1), and makes an online payment to the billing server 103 (Step 2). The user *A* then transmits the music data to the user *B* operating the second digital data recording and reproducing apparatus 1012 (Step 3). The user *B* makes an online payment to the billing server 103 with respect to the music data (Step 4). Thereafter, the user *B* transmits the music data to the user *C* operating the third digital data recording and reproducing apparatus 1013 (Step 5). The user *C* makes an online payment to the billing server 103 with respect to the music data (Step 6). Herein, the users surely have an option not to pay for the music data, and may merely pass the music data to others.

As such, the present copyright protection system can bill the users for the music data in the distribution process, benefiting the copyright holders to a greater extent. Moreover, the system may offer bonus such as coupon to encourage the users to distribute the music data thereamong. Details are left for later description.

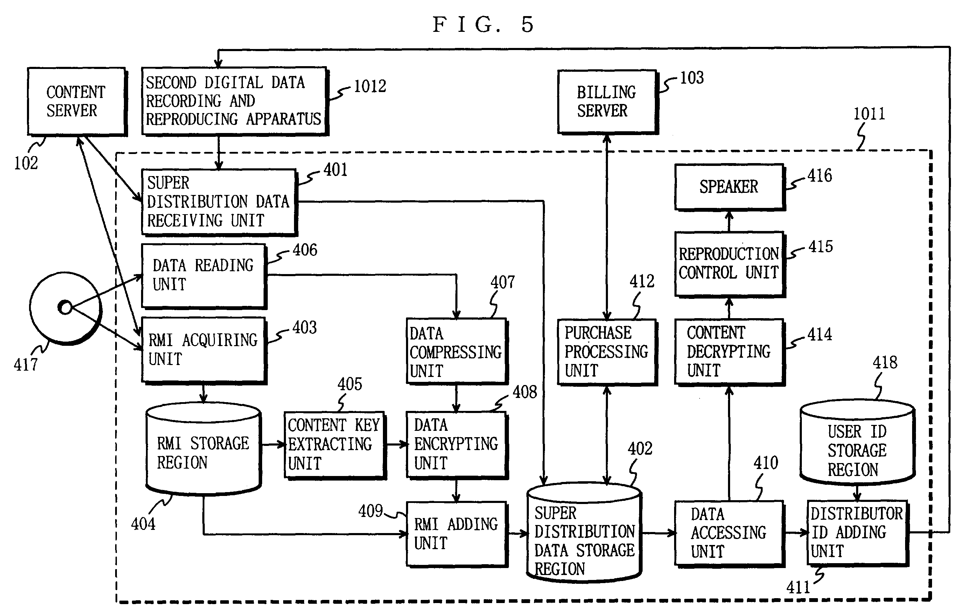

Next, the digital data recording and reproducing apparatus operated by the user as such is now described. FIG. 5 is a block diagram showing the structure of the first digital data recording and reproducing apparatus 1011. The digital data recording and reproducing apparatus in FIG. 5 includes a super distribution data receiving unit 401, a super distribution data storing region 402, an RMI acquiring unit 403, an RMI storing region 404, a content key extracting unit 405, a data reading unit 406, a data compressing unit 407, a data encrypting unit 408, an RMI adding unit 409, a data accessing unit 410, a distributor ID adding unit 411, a purchase processing unit 412, a content decrypting unit 414, a reproduction controlling unit 415, a speaker 416, and a user ID storage region 418.

Note herein that, the speaker 416 may be externally connected to the digital data recording and reproducing apparatus. Moreover, the RMI acquiring unit 403, the RMI storage region 404, the content key extracting unit 405, the data reading unit 406, the data compressing unit 407, the data encrypting unit 408, and the RMI adding unit 409 are provided, as will be described later, to convert unencrypted data, etc., to super distribution data. If there is no need for such conversion, these components may be omitted. Here, the second and third digital data recording and reproducing apparatuses 1012 and 1013 are structurally identical to the first digital data recording and reproducing apparatus 1011, and thus are not described again.

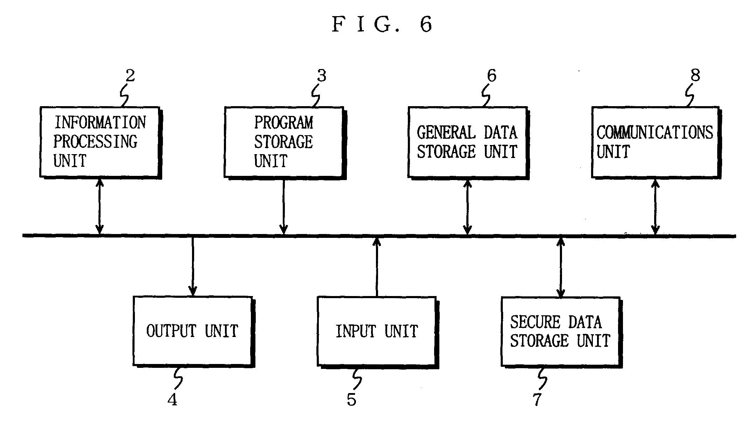

Such digital data recording and reproducing apparatus is generally implemented by a personal computer. FIG. 6 is a schematic diagram showing the structure of the first digital data recording and reproducing apparatus 1011 implemented by a general computer device.

The apparatus in FIG. 6 includes an information processing unit 2 operable to carry out data processing and controlling other components, a program storage unit 3 operable to store program data required for operating the information processing unit 2, an output unit 4 operable to display various information for the user and reproducing and outputting music data, etc., an input unit 5 operable to receive the user's instructions and data from an external storage medium, a general data storage unit 6 operable to store data such as super distribution data, a secure data storage unit 7 operable to store data which is to be kept secret from the user in a region inaccessible by normal operation, and a communications unit 8 operable to communicate with various servers via the Internet. These components are connected via a common system bus.

The input unit 5 is exemplarily composed of a CD-ROM reader, DVD reader, keyboard, and mouse, and receives the user's instructions, and data, data from an external recording medium such as CD-ROM, and the like. The output unit 4 is exemplarily composed of a display, printer, and speaker, and displays various information generated by the information processing unit 2 for the user, and plays back music. The information processing unit 2 exemplarily includes a CPU, and carries out various data processing to control other components while protecting a copyright of digital data. Such various data processing will be later described in detail.

Herein, the information processing unit 2 performs such various data processing with a program. The program is stored in the program storage unit 3, and is transmitted to the information processing unit 2 as required. The program storage unit 3 may be so configured as to store program information in a recording medium such as fixed storage including hard disk drive or semiconductor memory, or in an exchangeable recording medium such as optical disk (e.g., CD, DVD) and semiconductor memory card. If the recording medium in use is of an exchangeable type, it may be exchanged with another having a new program stored as appropriate.

The general data storage unit 6 is composed of a storage which is readable and writable such as hard disk drive and semiconductor memory, and stores data which is not necessarily kept secret from the user such as the super distribution data. The secure data storage unit 7 may be a storage such as hard disk or dedicated hardware, or a storage having an encrypted storage region set therein, and stores data to be kept secret from the user in a region inaccessible by normal operation. The communications unit 8 is exemplarily composed of a modem and router, and communicates with the content server 102, billing server 103, or other digital data recording and reproducing apparatuses via the Internet.

Note herein that, the digital data recording and reproducing apparatus is not limited to a personal computer, but may be implemented by the so-called STB (Set Top Box) which records broadcasting programs.

Next, the operation of the first digital data recording and reproducing apparatus 1011 shown in FIG. 5 is described. This apparatus operates differently between the super distribution data and the unencrypted data. Described next below is a first case where the user *A* receives the super distribution data, i.e., the first super distribution data in FIG. 2 or the second super distribution data in FIG. 3.

In FIG. 5, the first or second super distribution data is provided to the super distribution data receiving unit 401 from the content server 102, the second or third digital recording and reproducing apparatus 1012 or 1013 operated by other user, or the external recording medium 417 such as CD. The data is then stored in the super distribution data storage region 402. The storage location of the data is written to super distribution data management information, which will be described later in detail, stored in the secured region. Although the secured region may be separately provided from other storage regions, it is provided in the super distribution data storage region 402 in this apparatus.

Described next is a second case where the user *A* receives the unencrypted music data from the external recording medium 417 such as CD. The unencrypted music data may come from the content server 102 or others. If that is the case, however, copyright protection thereof is hardly protected, and thus such data is not taken into consideration here. Further, if the digital data recording and reproducing apparatus is configured without the RMI acquiring unit, the RMI storage region 404, the content key extracting unit 405, the data reading unit 406, the data compressing unit 407, the data encrypting unit 408, and the RMI adding unit 409, the following operation is not carried out.

In FIG. 5, the data reading unit 406 reads, from the external recording medium 417, unencrypted music data corresponding to the content 205 including the audio data 204. The RMI acquiring unit 403 acquires right management information from the content server 102 or the external recording medium 417. The acquired right management information is stored in the RMI storage region 404.

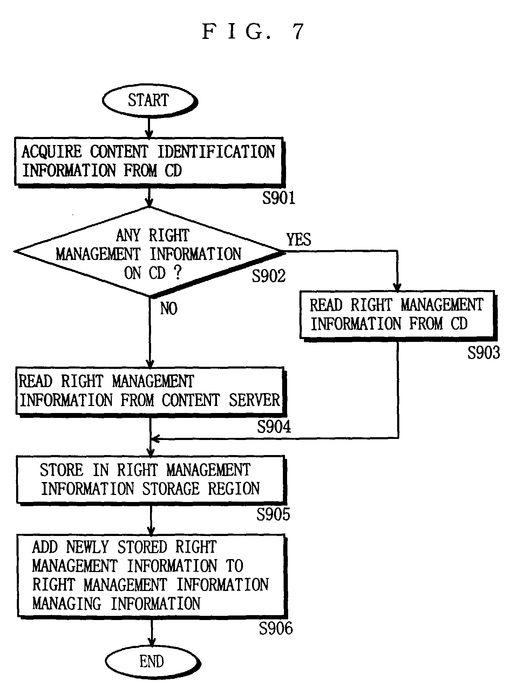

FIG. 7 is a flowchart showing the detailed operation of the first digital data recording and reproducing apparatus 1011 for acquiring the right management information. In step S901, the RMI acquiring unit 403 acquires content identifying information from the external recording medium 417 such as CD. The content identifying information is an identification code such as ISRC or title information provided to identify the contents.

In step S902, the RMI acquiring unit 403 determines whether or not the external recording medium 417 has right management information corresponding to the content specified by the acquired content identifying information. If yes, the procedure goes to step S903, and otherwise, goes to step S904.

In step S903, the RMI acquiring unit 403 acquires the right management information from the external recording medium 417. The procedure then goes to step S905. Note herein that, the right management information recorded on the external recording medium 417 is encrypted under a predetermined encryption system. Herein, the right management information may be recorded on the external recording medium such as CD or in a secured region of other type of recording medium such as SD (Secure Digital) card.

In step S904, the RMI acquiring unit 403 communicates with the content server 102 with security, and acquires right management information. Then, the procedure goes to step S905.

In step S905, the acquired right management information is stored in the RMI storage region 404, specifically, in a predetermined secured region provided in the digital data recording and reproducing apparatus 1011. Alternatively, the right management information is encrypted under a predetermined encryption system, and a decryption key therefor is only stored in the secured region.

In step S906, the RMI acquiring unit 403 adds information relevant to the newly acquired right management information to a right management information managing table, which is for managing the right management information in the RMI storage region 404.

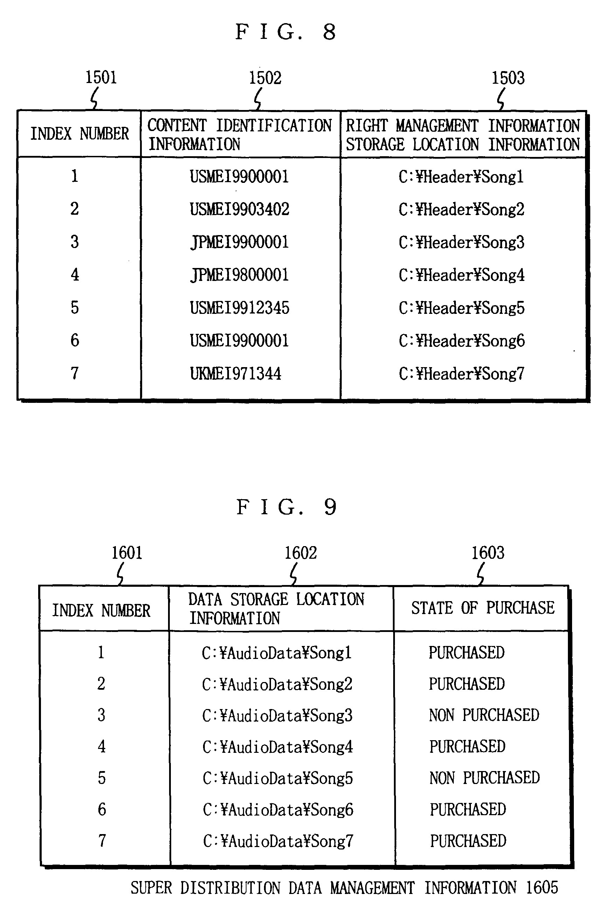

FIG. 8 is a diagram showing an exemplary structure of the right management information managing table. In FIG. 8, the right management information managing table includes an index number 1501, content identifying information 1502, and right management information storage location information 1503. The index number 1501 is assigned, in ascending order, to every right management information in the RMI storage region 404. In the example in FIG. 8, the RMI storage region 404 has seven different right management information.

The content identifying information 1502 includes the above-described content identifying information uniquely for each right management information. The right management information storage location information 1503 indicates the location where the right management information is stored. In the example in FIG. 8, the seven different right management information is each stored in a file in a Header directory in C-drive.

The content read from the data reading unit 406 is compressed by the data compressing unit 407 in a predetermined manner. Although the content is not necessarily compressed, the smaller data size is preferable for transmission/reception through the Internet. In terms of region size for storage, it is also preferable.

The compressed content is encrypted by the data encrypting unit 408. A key used to encrypt the content is the one extracted by the content key extracting unit 405 from the right management information stored in the RMI storage region 404.

The RMI adding unit 409 adds the right management information to the data encrypted by the data encrypting unit 408 so as to generate the first super distribution data. Such generated first super distribution data is stored in the super distribution data storage region 402, and the storage location thereof is written to the super distribution data management information stored in the secured region.

FIG. 9 is a diagram showing an exemplary structure of super distribution data management information 1605. The super distribution data management information 1605 in FIG. 9 includes an index number 1601, data storage location information 1602, and a state of purchase 1603. The index number 1601 is assigned, in ascending order, to every super distribution data stored in the super distribution data storage region 402. The data storage location information 1602 indicates the location where the super distribution data is stored. In the example in FIG. 9, the super distribution data is stored in seven different folders. The state of purchase 1603 indicates whether the super distribution data has been already purchased or not.

If the super distribution data reached the super distribution data storage region 402 is the one came from the super distribution data receiving unit 401, the state of purchase 1603 corresponding to the data is "not-yet-purchased". After a later-described billing processing completed, the state of purchase 1603 is changed to "purchased". Herein, the state of purchase 1603 may be indicated by a predetermined figure or a flag corresponding to a predetermined bit.

If the super distribution data reached the super distribution data storage region 402 is the one obtained by encrypting data read by the data reading unit 406 from the external recording medium 417, for example, and by converting the data into the super distribution data by the RMI adding unit 409, the state of purchase 1603 corresponding to the data is "purchased". This is because the user has already purchased the external recording medium 417.

Described next is the operation of the digital data recording and reproducing apparatus 1011 in FIG. 5 for reproducing such stored super distribution data therein and distributing the data to other users.

Referring to FIG. 5, in response to the user's instruction for reproducing a certain content, an extraction instructing unit (not shown) instructs the data accessing unit 410 to read the applicable super distribution data from the super distribution data storage region 402. The data accessing unit 410 then follows the instruction.

In the case that the billing processing has been already completed or previewing is available, the content decrypting unit 414 takes out the content 205 shown in FIG. 2 from the super distribution data accessed and extracted by the data accessing unit 410. The reproduction controlling unit 415 controls reproduction of the extracted content, and then instructs the speaker 416 to output audio data.

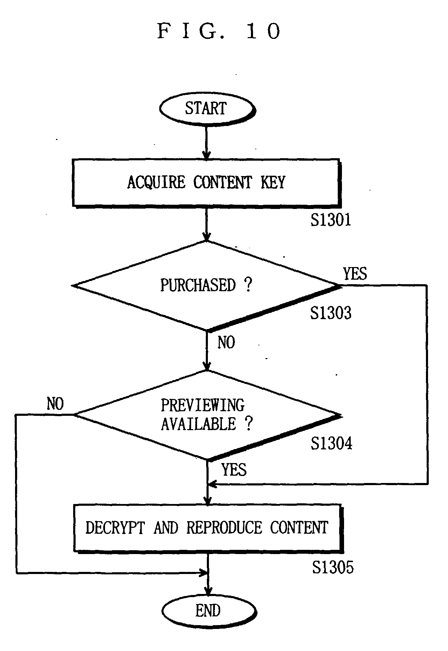

Such content decrypting unit 414 and the reproduction control unit 415 are described in detail for their operations by referring to FIG. 10. FIG. 10 is a flowchart showing the processing carried out to reproduce the super distribution data stored in the super distribution data storage region 402.

In step S1301, the content decrypting unit 414 takes out, from the super distribution data extracted by the data accessing unit 410, the content key 202 and the billing control information 201 included in such right management information 203 as shown in FIG. 2. As already described, a specific software uses the right management information key to decrypt such information.

In step S1303, the content decrypting unit 414 refers to the super distribution data management information 1605 and checks whether the state of purchase 1603 for the super distribution data to be reproduced indicates "purchased". If yes, the procedure jumps to step S1305, and otherwise, goes to step S1304.

In step S1304, the content decrypting unit 414 refers to the billing control information 201 included in the decrypted right management information 203, and checks whether previewing is available. If available, the procedure goes to step S1305, and otherwise, this is the end of the processing and the decrypted content is discarded. If the previewing is available for several number of times, the number is referred to in the billing control information 201. The previewing is available for the number of times, which is decremented by every listening.

In step S1305, the content decrypting unit 414 uses the extracted content key 202 to decrypt the encrypted content included in the super distribution data accessed and extracted by the data accessing unit 410. Further, the reproduction controlling unit 415 controls reproduction of the extracted content, and then instructs the speaker 416 to output music, for example. Herein, in order to record the number of listenings for the content, the number of listenings in the right management information 203 is incremented, and then the information is encrypted again and converted back into the super distribution data for storage in the super distribution data storage region 402. Similarly, when the number of permissive previewing is already set, the number in the right management information 203 is decremented, and then the information is encrypted again and converted back into the super distribution data for storage. Further, if the billing is made for every listening, the corresponding state of purchase 1603 is changed to "not-yet-purchased" immediately after the playback.

Described below is a case where the content is distributed to other users. Referring to FIG. 5, in response to the user's instruction for distributing some super distribution data, similarly to the case for reproduction, the extraction instructing unit instructs the data accessing unit 410 to access and extract the applicable super distribution data. The distributor ID adding unit 411 searches the user ID storage region 418 for the specific user ID so as to generate the second super distribution data 505 therewith. The generated second super distribution data 505 is exemplarily transmitted to the second digital data recording and reproducing apparatus 1012. Herein, the data can surely be transmitted to other digital data recording and reproducing apparatuses, or recorded in an easy-to-carry recording medium such as SD card and handed to other users.

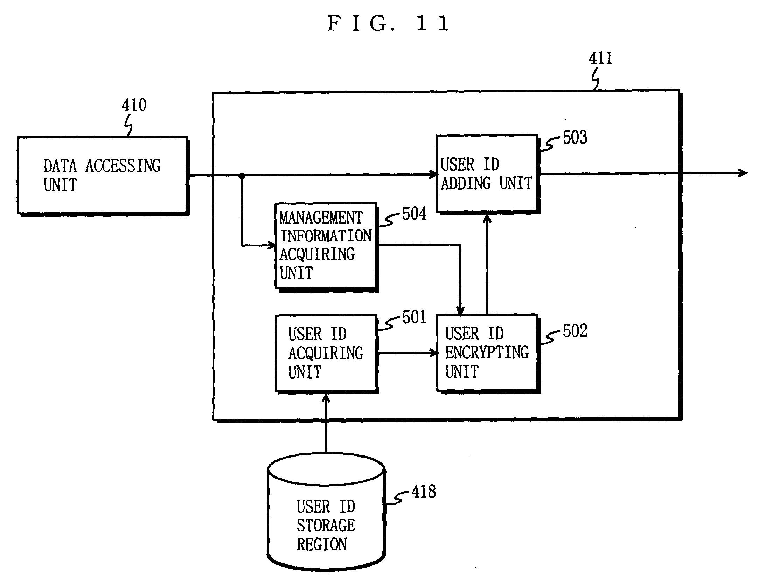

Next below, the distributor ID adding unit 411 is described for its structure and operation in detail. FIG. 11 is a block diagram showing the detailed structure of the distributor ID adding unit 411. The distributor ID adding unit 411 in FIG. 11 includes a user ID acquiring unit 501, a user ID encrypting unit 502, a user ID adding unit 503, and a management information acquiring unit 504.

The user ID acquiring unit 501 acquires a specific user ID from the secured region, i.e., the user ID storage region 418. The specific user ID is an identification code uniquely provided to each user or digital data recording and reproducing apparatus. Note herein that, the specific user ID may be previously stored in the user ID storage region 418, or may be provided by an ID providing server or the billing server 103 through a predetermined procedure.

The management information acquiring unit 504 reads, via the data accessing unit 410, the super distribution data management information 1605 stored in the secured region. Thereafter, the state of purchase 1603 in the read super distribution data management information 1605 is inputted to the user ID encrypting unit 502.

The user ID encrypting unit 502 then writes the state of purchase 1603 inputted from the management information acquiring unit 504 to the user ID acquired by the user ID acquiring unit 501. Typically, the user ID is composed of ID and the state of purchase. Thereafter, the user ID encrypting unit 502 encrypts the user ID under a predetermined encryption system.

The user ID adding unit 503 adds the user ID encrypted by the user ID encrypting unit 502 to the super distribution data accessed and extracted by the data accessing unit 410, and thus generates the second super distribution data 505.

In the case that the super distribution data accessed and extracted by the data accessing unit 410 is the first super distribution data having no user ID 301 provided, simply the distributor ID may be provided thereto. On the other hand, for the second super distribution data having the user ID already provided, the distributor ID may be added in various manners.

For example, the already-provided user ID may be deleted before the distributor ID is added, or accompanied by the distributor IDs in time order. For the latter case that the distributor IDs are plural, the number thereof may be limited to the last several. Herein, the user IDs are assumed to be the last two, specifically, the distributor ID of this apparatus is followed by another distributor ID belonging to the apparatus from which the data has been distributed.

In such manner, no matter which type of super distribution data is accessed and extracted by the data accessing unit 410, i.e., the first or second super distribution data, the user ID adding unit 503 adds the encrypted user ID at the head thereof so that the user IDs are the last two at most. The second super distribution data 505 is thus generated.

Described next below is the purchase processing in the digital data recording and reproducing apparatus 1011. As described in the foregoing, the super distribution data stored in the super distribution data storage region 402 includes the data not-yet-purchased. Therefore, in response to the user's instruction for purchase, a purchase instructing unit (not shown) instructs the purchase processing unit 412 to read the super distribution data storage region 402 for the applicable super distribution data. The purchase processing unit 412 then follows the instruction, and then goes through the billing processing.

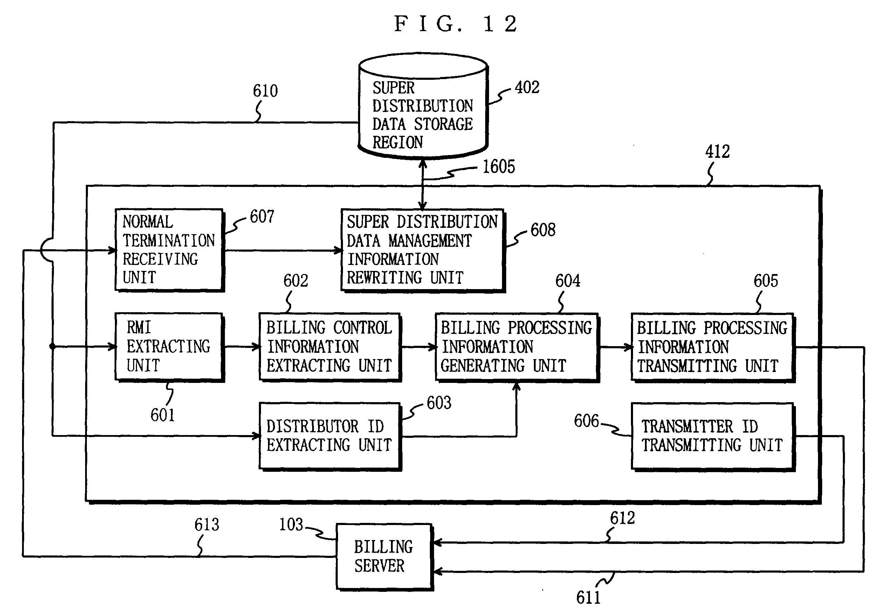

FIG. 12 is a block diagram showing the detailed structure of the purchase processing unit 412. The purchase processing unit 412 in FIG. 12 includes an RMI extracting unit 601, a billing control information extracting unit 602, a distributor ID extracting unit 603, a billing processing information generating unit 604, a billing processing information transmitting unit 605, a transmitter ID transmitting unit 606, a normal termination receiving unit 607, and a super distribution data management information rewriting unit 608.

The RMI extracting unit 601 extracts right management information from the read super distribution data 610. The billing control information extracting unit 602 then extracts billing control information from the right management information extracted by the RMI extracting unit 601. If the read super distribution data has any user ID added, the distributor ID extracting unit 603 extracts the user ID, and then instructs the billing processing information generating unit 604 to add the extracted user ID. To the extracted billing control information, the billing processing information generating unit 604 adds the user ID extracted by the distributor ID extracting unit 603 so as to generate the billing processing information 611. As such, the billing processing information transmitting unit 605 transmits such generated billing processing information 611 to the billing server 103.

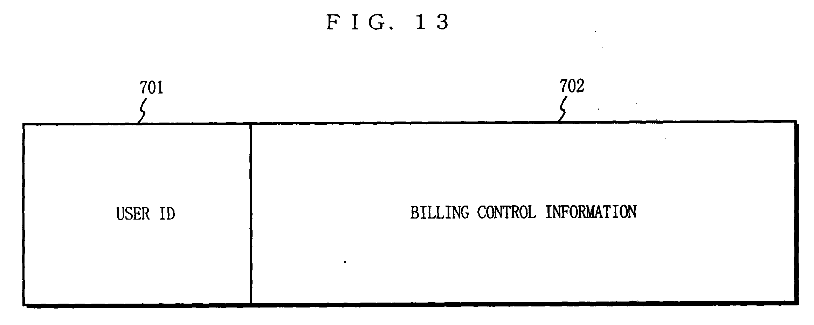

FIG. 13 is a diagram showing an exemplary structure of the billing processing information 611. The billing processing information 611 in FIG. 13 includes billing control information 702 extracted by the billing control information extracting unit 602, and a user ID 701 extracted by the distributor ID extracting unit 603. Herein, when the read super distribution data has no user ID added, the billing processing information 611 includes only the billing control information 702. The user ID 701 extracted by the distributor ID extracting unit 603 may include not only the distributor ID belonging to the user who has distributed the data to the apparatus but another involved in data distribution precedent thereto.

Simultaneously or immediately after the billing processing information transmitting unit 605 transmits such billing processing information 611 as in FIG. 13, the transmitter ID transmitting unit 606 transmits, to the billing server 103, a transmitter ID 612, which is the specific user ID acquired from the secured region for the purpose of identifying the transmitter. Typically, such information is sequentially transmitted as a set of data.

The normal termination receiving unit 607 receives, from the billing server 103, a billing processing normally terminated notice 613, which tells that the billing processing has been normally completed. Once the billing processing normally terminated notice 613 is received, the super distribution data management information rewriting unit 608 changes the state of purchase 1603, from "not-yet-purchased" to "purchased", in the super distribution data management information 1605 stored in the super distribution data storage region 402.

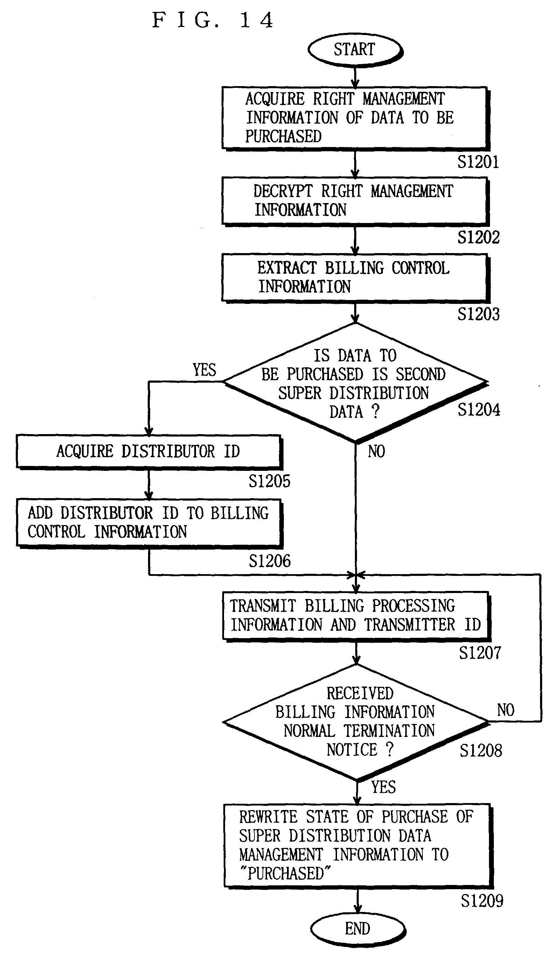

Described next is the operation for purchasing such super distribution data by referring to a flowchart shown in FIG. 14. In step S1201 in FIG. 14, the RMI extracting unit 601 extracts right management information from the read super distribution data 610.

In step S1202, the billing control information extracting unit 602 uses the above-described right management information key to decrypt the extracted right management information. Such decryption is carried out by a dedicated software as described in the foregoing. In step S1203, the billing control information extracting unit 602 extracts billing control information from the decrypted right management information. The extracted billing control information is the one included in the billing processing information 611.

In step S1204, the distributor ID extracting unit 603 determines whether the read super distribution data is the second super distribution data. If yes, the procedure goes to step S1205, and otherwise, jumps to step S1207.

In step S1205, the distributor ID extracting unit 603 extracts the user ID from the second super distribution data. In step S1206, the distributor ID extracting unit 603 then adds the extracted user ID to the billing control information so as to generate such billing processing information 611 as shown in FIG. 13.

In step S1207, the billing processing information transmitting unit 605 transmits the billing processing information 611 to the billing server 103. Simultaneously therewith, or sequentially, the transmitter ID transmitting unit 606 acquires the transmitter ID from the secured region, and then transmits the transmitter ID to the billing server 103.

In step S1208, after a lapse of time taken for the billing server 103 to go through the processing, the normal termination receiving unit 607 determines whether the billing processing normally terminated notice 613 has been transmitted from the billing server 103. If yes, the procedure goes to step S1209, and otherwise, returns to step S1207. Herein, if the billing processing normally terminated notice 613 is not transmitted no matter how many times the processing in step S1207 is repeated, the billing server 103 may have gone down. Accordingly, a predetermined processing (not shown) is carried out to handle errors.

In step S1209, the super distribution data management information rewriting unit 608 reads the super distribution data management information 1605 from the super distribution data storage region 402, changes the state of purchase 1603 therein from "not-yet-purchased" to "purchased", and then records the information again in the super distribution data storage region 402.

In the above description, the billing processing information is presumed to be transmitted to the billing server online. However, the billing processing information may be once stored in the digital data recording and reproducing apparatus, and then transmitted to the billing server whenever is appropriate.

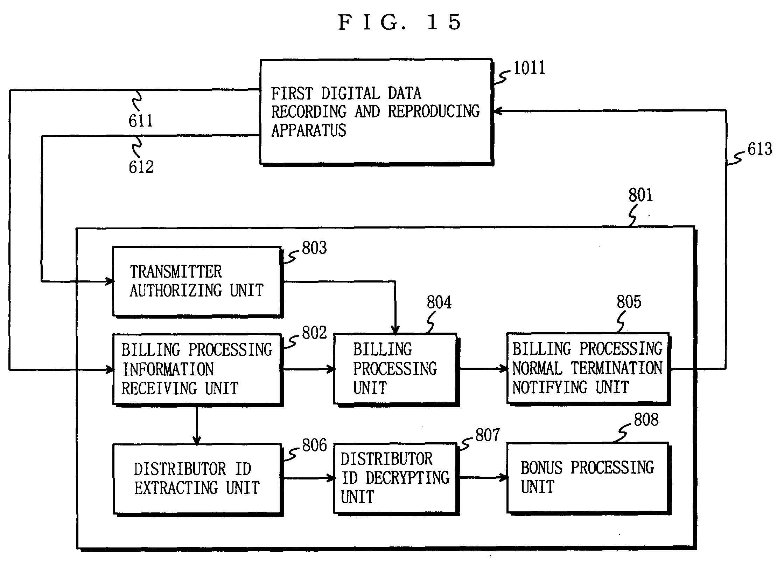

Next, the billing server 103 carrying out the billing processing is described for its structure and operation. FIG. 15 is a diagram showing the structure of a billing processing unit 801 provided in the billing server 103. The billing processing unit 801 in FIG. 15 includes a billing processing information receiving unit 802, a transmitter authorizing unit 803, a billing processing unit 804, a normal termination notifying unit 805, a distributor ID extracting unit 806, a distributor ID decrypting unit 807, and a bonus processing unit 808.

The billing processing information receiving unit 802 receives the billing processing information 611 transmitted from the purchase processing unit 412. The billing processing information then goes to the billing processing unit 804 and the distributor ID extracting unit 806. The transmitter authorizing unit 803 receives the user ID 612 came from the purchase processing unit 412 in the first digital data recording and reproducing apparatus 1011, and then specifies the transmitter.

Based on the billing control information included in the received billing processing information, the billing processing unit 804 carries out the billing processing with respect to the user specified by the transmitter authorizing unit 803. The normal termination noticing unit 805 then transmits the billing processing normally terminated notice 613 to the purchase processing unit 412 in the first digital data recording and reproducing apparatus 1011.

If the billing processing information 611 is provided with the user ID specifying the distributor, the distributor ID extracting unit 806 extracts the distributor ID. As described in the foregoing, the extracted distributor ID may be both the current and previous distributor IDs. The distributor ID decrypting unit 807 decrypts the distributor ID extracted by the distributor ID extracting unit 806. The bonus processing unit 808 goes through the bonus processing with respect to the user specified by the decrypted user ID. Details are described later.

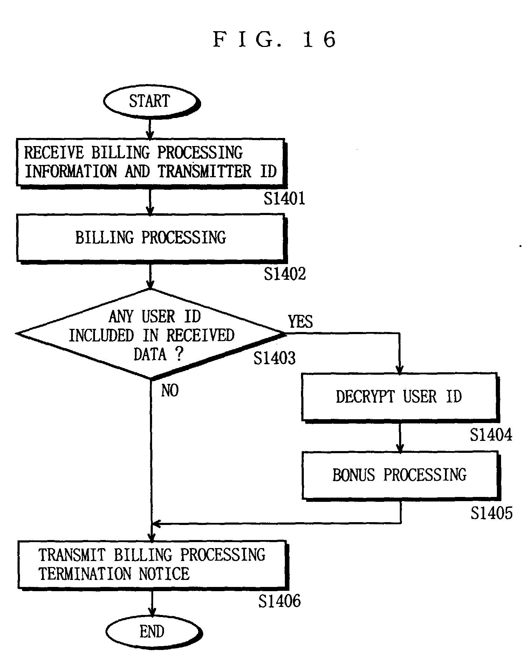

Described next is the detailed operation of the billing processing unit 801 by referring to FIG. 16. FIG. 16 is a flowchart showing the processing for each component in the billing processing unit 801.

In step S1401, the billing processing information receiving unit 802 receives the billing processing information 611 from the purchase processing unit 412, while the transmitter authorizing unit 803 receives the transmitter ID from the purchase processing unit 412.

In step S1402, the billing processing unit 804 carries out the billing processing with respect to the user specified by the transmitter ID received by the transmitter authorizing unit 803. This processing is done based on the billing control information included in the billing processing information which has been received by the billing processing information receiving unit 802. Herein, as already described, the billing control information includes a bill, for example, necessary for billing.

In step S1403, the distributor ID extracting unit 806 determines whether the billing processing information received by the billing processing information receiving unit 802 is provided with any user ID. If yes, the procedure goes to step S1404, and otherwise, jumps to step S1406.

In Step S1404, the distributor ID decrypting unit 807 decrypts the user ID in a predetermined manner. Herein, the user ID may be both the current and previous distributor IDs.

In step S1405, the bonus processing unit 808 carries out the bonus processing with respect to the user specified by the decrypted user ID. The user, thereby, is offered with discount or coupon, which is effective for the next bill. Herein, as described in the foregoing, the user entitled to such bonus may be both the current and previous distributors. If this is the case, the bonus processing unit 808 increases the discount rate or the face value of coupon for the current distributor more than the previous distributor. This is because, the current distributor is the one who directly involved with the data distribution, but the previous distributor indirectly.

The decrypted user ID is provided with the above-described billing information. Accordingly, for the user who has already purchased the music data, the bonus processing unit 808 increases the discount rate or the face value of coupon more than the user who has not yet.

As is known from the above, in the present digital data copyright protection system, user's bill payment and his/her contribution to the distribution determine the discount rate or the face value of coupon. In this manner, the user may be willing to purchase data or involve in the data distribution to increase the value of his/her bonus. With such user's involvement, the present digital data copyright protection system can benefit copyright holders to a greater extent while protecting their copyrights.

In the above, the bonus for the user is exemplarily discount or coupon, but is not restrictive thereto. The bonus may be varied to a point exchangeable with merchandise, merchandise, or special service, anything is possible as long as the bonus attracts the users well enough.

### (Second Embodiment)

A digital data copyright protection system according to a second embodiment of the present invention is almost the same as the one described in the first embodiment. Specifically, the content server 102 and the billing server 103 herein are identical to those in the first embodiment. In addition, the digital data recording and reproducing apparatus herein is also almost the same in structure. Therefore, in the second embodiment, only any difference from the first embodiment is described. Any identical component shares the same reference numeral, and is not described again.

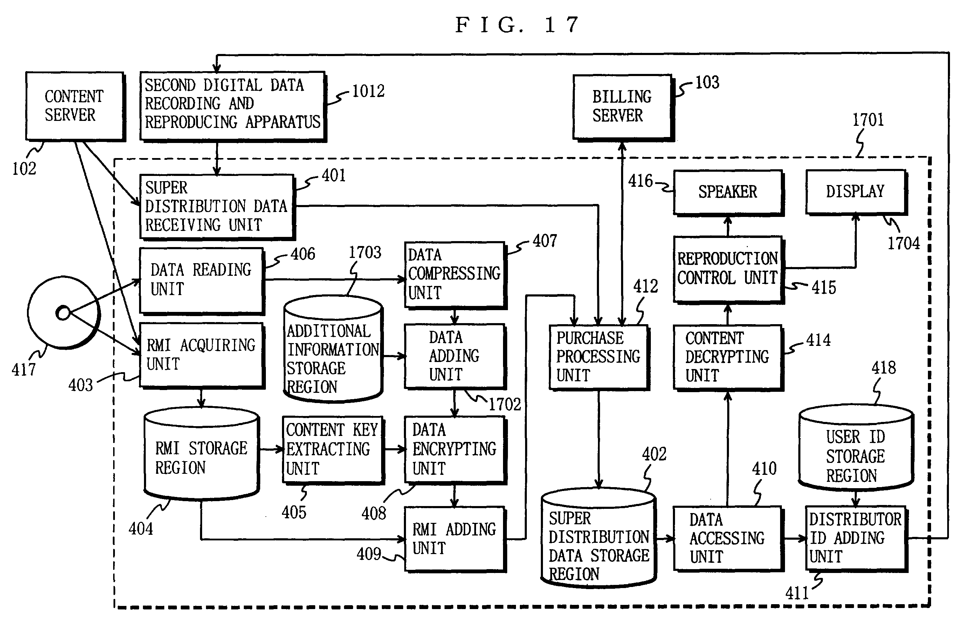

FIG. 17 is a block diagram showing the structure of a digital data recording and reproducing apparatus 1701 of the second embodiment. In FIG. 17, the digital data recording and reproducing apparatus 1701 includes the super distribution data receiving unit 401, the super distribution data storage region 402, the RMI acquiring unit 403, the RMI storage region 404, the content key extracting unit 405, the data reading unit 406, data compressing unit 407, the data encrypting unit 408, the RMI adding unit 409, the data accessing unit 410, the distributor ID adding unit 411, the purchase processing unit 412, the content decrypting unit 414, the reproduction control unit 415, the speaker 416, the user ID storage region 418, a data adding unit 1702, an additional information storage region 1703, and a display 1704.

As is known from the above, the difference from the first digital data recording and reproducing apparatus 1011 of the first embodiment is in that the data adding unit 1702, the additional information storage region 1703, and the display 1704 are additionally provided. Described next below is the operation of the data adding unit 1702.

The data adding unit 1702 reads, from the additional information storage region 1703, image data previously provided by the user and/or additional information including reproduction control information as to the image data and audio data. Such image data and/or information is added to the audio data which has been compressed by the data compressing unit 407. Typically, the additional information is provided at the tail of the audio data, which is composed of one or more pieces. Specifically, the additional information is provided at the tail of the audio data 204 in the content 205 in FIG. 2. Note herein that, the additional information may be previously provided to the audio data to be compressed together with the audio data.

Herein, the image data provided by the user is displayed at a predetermined timing when the content is reproduced. The reproduction control information is for to control reproduction of the content. For example, the reproduction control information controls an order and timing to reproduce the audio data, if plural, or controls a timing to display the image data provided by the user.

The data encrypting unit 408 subjects the audio data having the image data added by the data adding unit 1702 to encryption. Surely, only the audio data may be encrypted. Now and onwards, the digital data recording and reproducing apparatus 1701 operates in a similar manner to the first digital data recording and reproducing apparatus 1011 of the first embodiment, and is not described again.

Note herein that, in the apparatus shown in FIG. 17, the speaker 416 is used to reproduce the content, and the display 1704 may be also used to display the image. As already described by referring to FIG. 6, when this apparatus is implemented by a common personal computer, the display may be a CRT or others to display various information. Therefore, when the content includes the image data, the image is to be displayed on the display 1704 popular for the personal computer.

As described in the foregoing, according to the present digital data copyright protection system, there is no more need to encrypt CDs to charge appropriate royalties therefor and protect the copyright thereof. Further, with the reproduction control information on image and audio provided by the user, the music content for distribution as super distribution data can be more entertaining.

### (Third Embodiment)

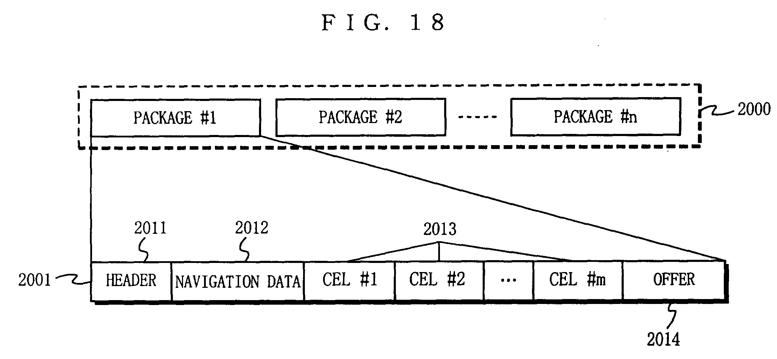

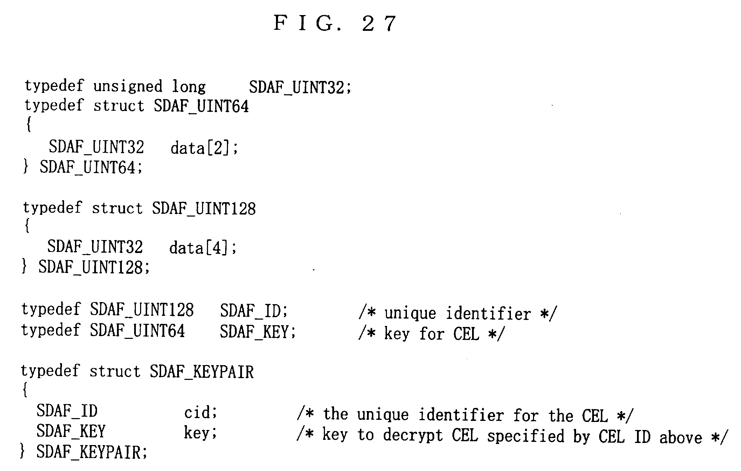

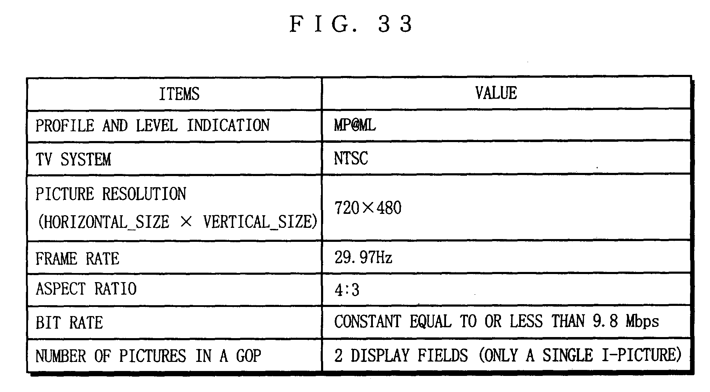

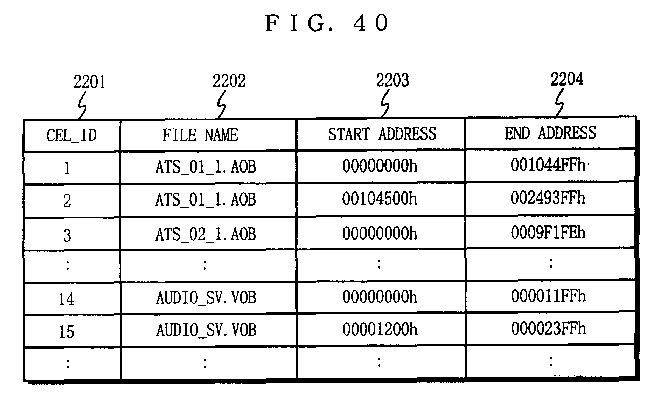

As the third embodiment, as a specific example of super distribution data as mentioned in the first and second embodiments, a content distribution format called SDAF (Secure Digital Audio Format) is described below. Referring to FIGS. 18 to 39, details on the SDAF is first described, and then referring to FIGS. 40 to 45, how to use the SDAF is described.

The content distribution format (SDAF) according to the present embodiment is used for describing multimedia contents that include audio, images, video, text, and file data. The multimedia contents described with SDAF are herein called an SDAF title. Presentation data each comprising the SDAF title is herein called a content element (hereinafter abbreviated as CEL). Each CEL is assigned a CEL identifier that is unique in the SDAF title (hereinafter abbreviated as CEL_ID).

The SDAF title is distributed as being split into units called SDAF packages. Each SDAF package is assigned a package identifier that is unique in the entire distribution system. FIG. 18 is a diagram showing an example of the SDAF package. As shown in FIG. 18, an SDAF title 2000 is composed of a plurality of SDAF packages. Each package 2001 is composed of a header 2011, navigation data 2012, a plurality of CELs 2013, and an offer 2014.

The header 2011 includes information such as location, size, and attribute of each data in the package. Such information defines the package structure. The navigation data 2012 is playback control information specifying the operation of the player in playing back the SDAF title. From the navigation data 2012, a CEL included in the package to which the navigation data belong or in other packages is referred to. The CEL 2013 is obtained by encrypting each presentation data composing the SDAF title, and more specifically, by encrypting audio, images, video, text, or file data. A pair of a decryption key for decrypting the CEL 2013 and CEL_ID is called a key pair. The offer 2014 includes a plurality of key pairs, and purchase rules describing the purchase price and available period for each key pair.

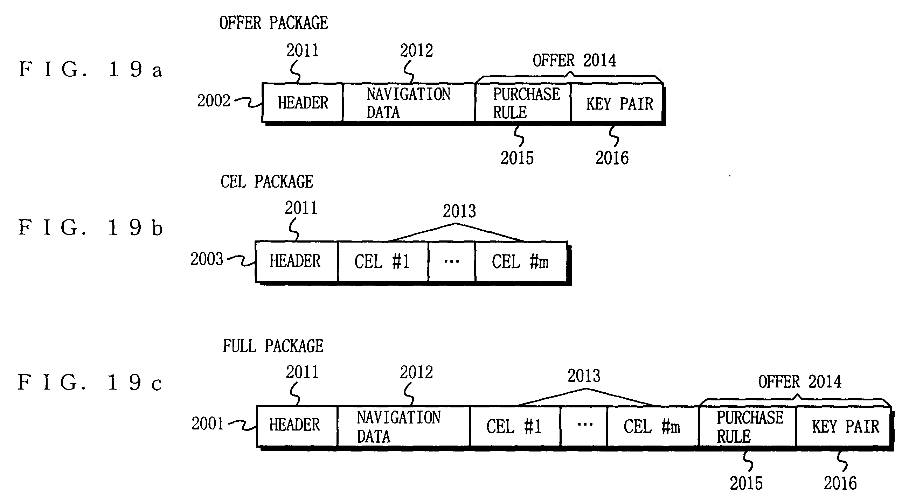

FIGS. 19a to 19c are diagrams showing three types of SDAF packages. A full package 2001 shown in FIG. 19c includes, similarly to FIG. 18, a header 2011, navigation data 2012, a plurality of CELs 2013, and an offer 2014. An offer package 2002 shown in FIG. 19a includes the header 2011, the navigation data 2012, and the offer 2014, but does not include any CEL 2013. A CEL package 2003 shown in FIG. 19b includes the header 2011 and the plurality of CELs 2013. Since the navigation data 2012 is required for playing back the SDAF title, the full package 2001 and the offer package 2002 can be played back alone, but the CEL package 2003 cannot.

The CEL package is used for splitting the SDAF title according to the distribution channel. For example, when distributed by using a CD-ROM, the SDAF title is recorded as a full package in the CD-ROM. On the other hand, when distributed through the Internet, the SDAF title is split into one full package and a plurality of CEL packages for distribution. For example, the SDAF title is split into one full package including an audio CEL and a plurality of CEL packages including a video CEL that is referred to from the full package for distribution.

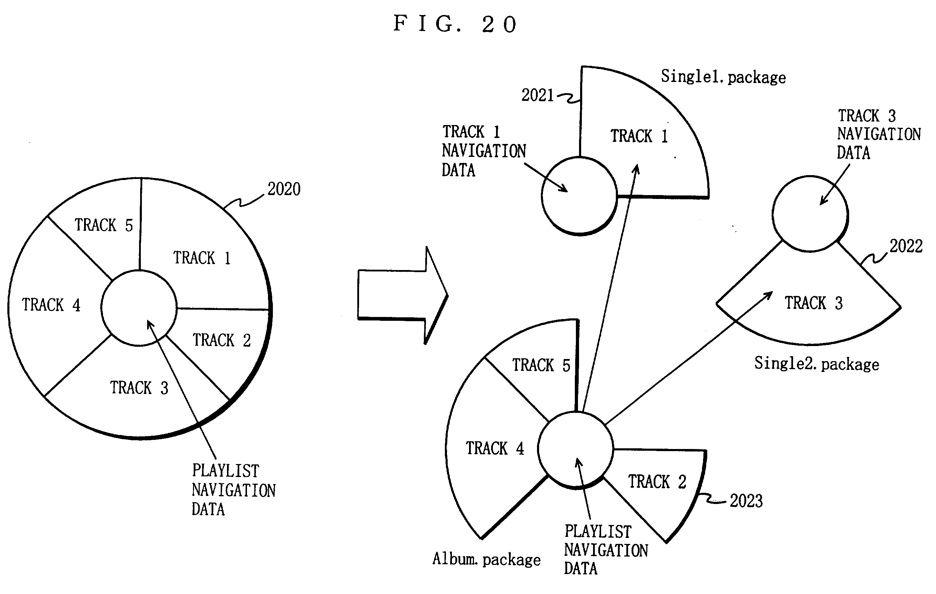

Further, as shown in FIG. 20, the SDAF title may be split into a plurality of SDAF packages by tracks. In package division as shown in FIG. 20, an SDAF title 2020 including audio data for five tracks is split into three packages 2021 to 2023. The first to third packages 2021 to 2023 have package names Single1, Single2, and album, respectively. The first and second packages 2021 and 2022 both include an audio CEL for one track and navigation data for controlling playback of the CEL. The third package 2023 includes an audio CEL for three tracks and navigation data for controlling playback of all audio CELs included in the first to third packages 2021 to 2023. As such, by dividing the SDAF title into a plurality of SDAF packages, it is possible to make each data size smaller and easily handle each data.

The header, offer, navigation data, and CEL, which compose the SDAF package, are described in this order below.

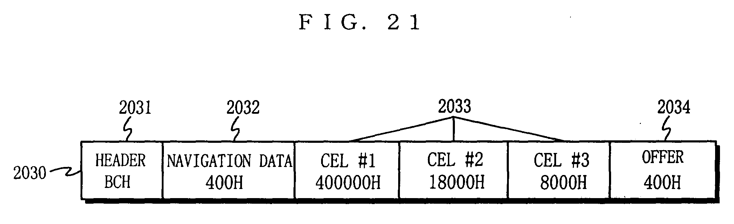

The header 2011 is first described. Here, an SDAF package shown in FIG. 21 is taken as an example, and a header 2031 of an SDAF package 2030 is described. In the SDAF package 2030, it is herein assumed that the size of navigation data 2032 and the size of an offer 2034 are 400H each, in hexadecimal notation. This package includes three CELs 2033, and the types thereof are, from first, audio, image, and file. It is assumed here in that the sizes of these CELs are, from first, 400000H, 18000H, and 8000H in hexadecimal notation.

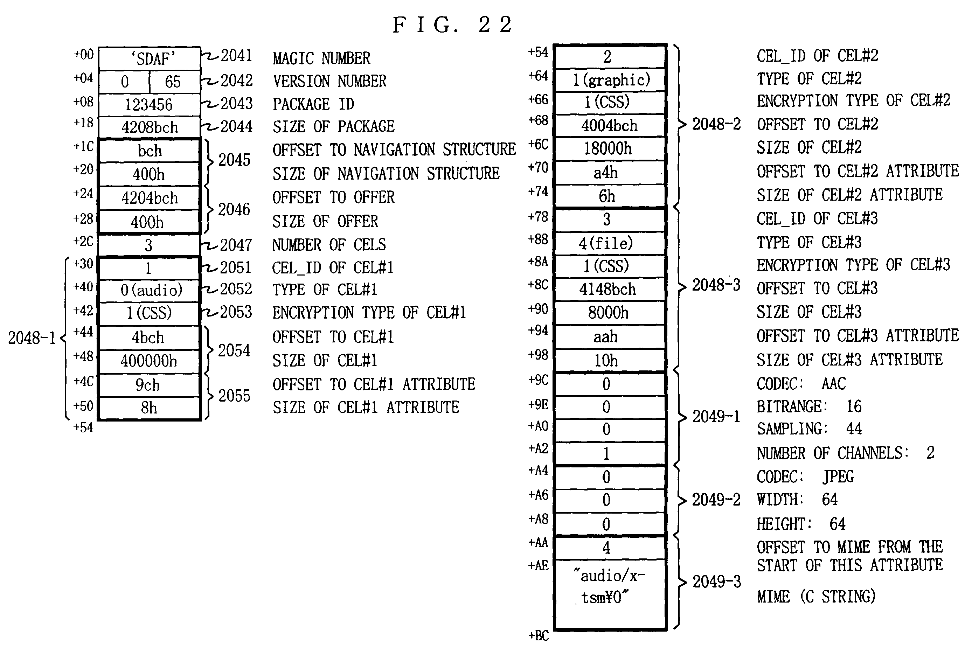

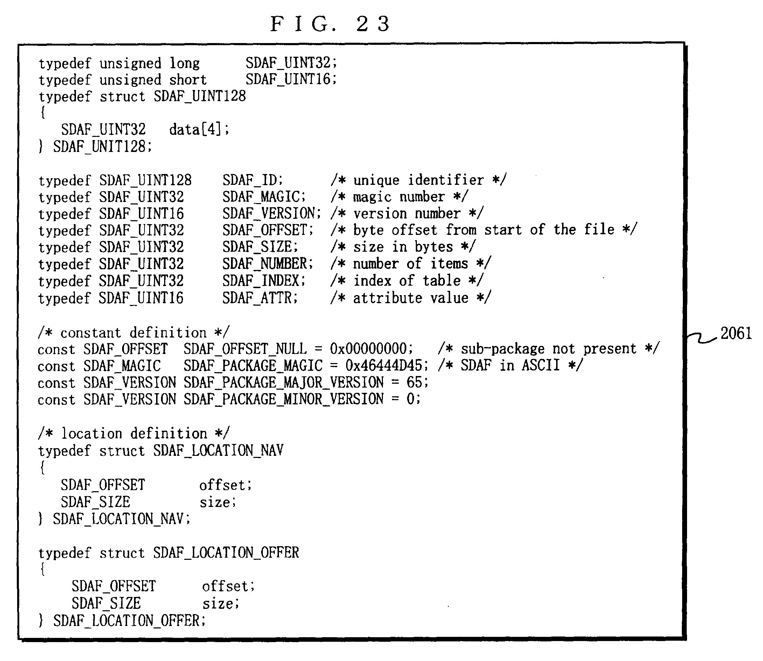

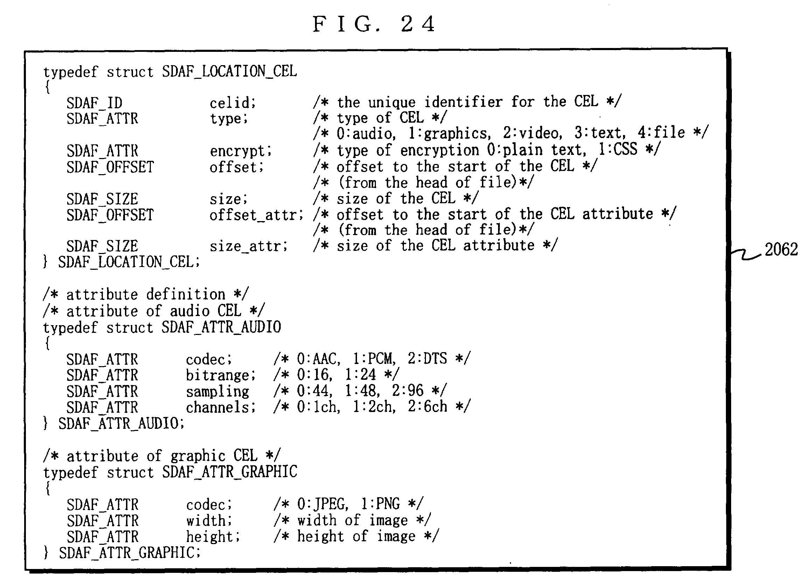

FIG. 22 is a diagram showing the structure of the header 2031. In the header 2031, data as described below is sequentially stored, and the size of the header is BCH in hexadecimal notation. Note that the structure of the header 2031 can be described in the C++ language as shown in FIGS. 23 and 24. FIGS. 23 and 24 are a diagram showing a sequential source code as being split into two, and before division, a source code 2062 shown in FIG. 24 follows a source code 2061 shown in FIG. 23.

At the start of the header 2031, a magic number 2041 (4 bytes) indicating that the file is in the SDAF format is stored. The value of the magic number 2041 is a character string "SDAF". Then, a version number 2042 (4 bytes) of the SDAF is stored. Then, a package ID 2043 (16 bytes) and a package size 2044 (4 bytes) are stored. Then, navigation data location information 2045 (SDAF_LOCATION_NAV in FIG. 23), offer location information 2046 (SDAF_LOCATION_OFFER in FIG. 23), and the number of CELs in the package 2047 are stored. Then, CEL information 2048 (SDAF_LOCATION_CEL in FIG. 24) for each CEL is stored. Lastly, a CEL attribute table 2049 indicating an attribute of each CEL is stored.

The navigation data location information 2045 indicates the location and size of the navigation data 2032. The offer location information 2046 indicates the location and size of the offer 2034. These two pieces of information are both composed of an offset (4 bytes) from the start of the SDAF package and each size (4 bytes) thereof.

The CEL information 2048 is composed of a CEL_ID 2051 (16 bytes), a CEL type 2052 (2 bytes), a CEL encryption type 2053 (2 bytes), a CEL data location information 2054, and a CEL attribute table location information 2055. The CEL_ID 2051 is a content element identifier that is unique in the SDAF title. The CEL type 2052 takes any value of audio, image, video, text, and file. The CEL encryption type 2053 indicates an algorithm used for encrypting the CEL. The CEL data location information 2054 and CEL attribute table location information 2055 are both composed of an offset (4 bytes) from the start of the SDAF package and each size (4 bytes) thereof. If the offset or size is 0, that means no data exists.

The CEL attribute table 2049 is a list of attributes specified for each CEL type. An audio CEL attribute table (SADF_ATTR_AUDIO in FIG. 24) includes at least CODEC, the number of quantized bits, sampling frequency, and the number of audio channels. An image CEL attribute table (SDAF_ATTR_GRAPHIC in FIG. 24) includes at least the height and width of the image and the encryption type. A video CEL attribute table includes at least the height and width of the video and the encryption type. A text attribute table includes at least the encryption type of the text, such as Unicode or music shift JIS (Japanese Industrial Standards). A file CEL attribute table includes at least the type of MIME (Multipurpose Internet Message Extension).

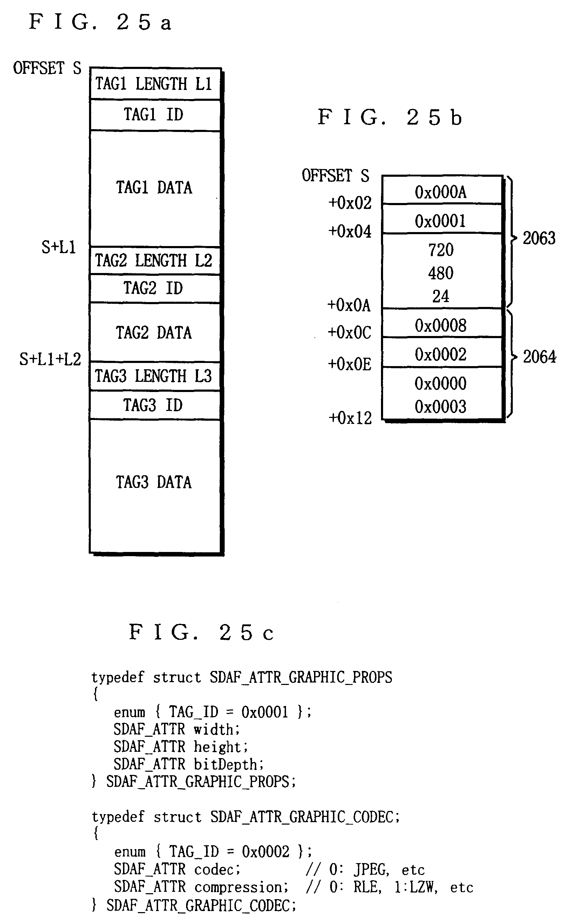

The CEL attribute table 2049 is defined not as a fixed-length table but with a variable-length tag structure as shown in FIGS. 25a to 25c. If the tag structure is used, a tag length and tag ID are stored preceding the data, as shown in FIG. 25a. For example, the image CEL attribute table is composed of a characteristic tag 2063 and an encryption type tag 2064. The table elements are specified by using the tag structure, thereby a new table element can be added to the data format or the data format can be changed only by adding a tag. The CEL attribute table is specified by using the tag structure with a great potential for expansion.

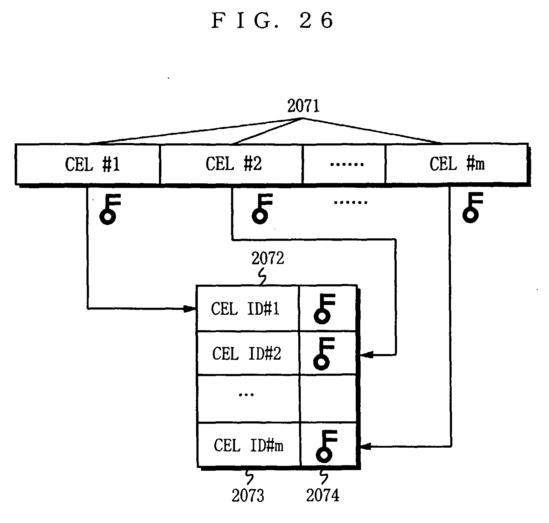

Next, the offer 2014 is described. As stated above, the offer includes a plurality of key pairs and purchase rules for each key pair. Each key pair is composed of a decryption key for decrypting the CEL and a CEL_ID. FIG. 26 is a diagram showing the correspondence between the key pair and the CEL. As shown in FIG. 26, a key pair 2072 is composed of a decryption key 2073 and a CEL_ID 2074, and each key pair 2072 is related to each CEL 2071. The offer includes not only the key pair of the CEL included in the SDAF package but also all key pairs of the CELs included in the SDAF packages of the same SDAF title. In other words, when one SDAF title is split into a plurality of SDAF packages, only one SDAF package includes an offer, and this offer includes all key pairs of the CELs included in the SDAF title.

The purchase rules are described by using a language for describing use conditions of the key pair, called right management language. The use conditions of the key pair include the date of purchase, use period, and whether a specific CEL or SDAF title has been purchased or not. The purchase rules are specified by using these use conditions, and thereby the same CEL can be sold at different prices depending on the conditions.

Next, the navigation data 2012 is described. The navigation data is created by a content creator so that the user can use the CEL most effectively, defining the logic structure of the SDAF title.

In SDAF, XML (eXtensible Markup Language), which is a tag description language in a text format, is used for describing the navigation data. When the data structure is described in XML, a tag structure in a text format is used. Therefore, data described in XML is redundant compared with binary data. Nevertheless, XML is adopted because of its excellent expandability.

To refer to the CEL from the navigation data, a CEL locator is used. The CEL locator is a concatenation of the package ID and CEL_ID taking '?' (question mark) as a delimiter. However, for the CEL included in the SDAF package that includes the navigation data, the package ID and the delimiter are omitted, and the CEL_ID becomes the CEL locator. The CEL locator can specify the CEL independently of the physical address of the CEL.

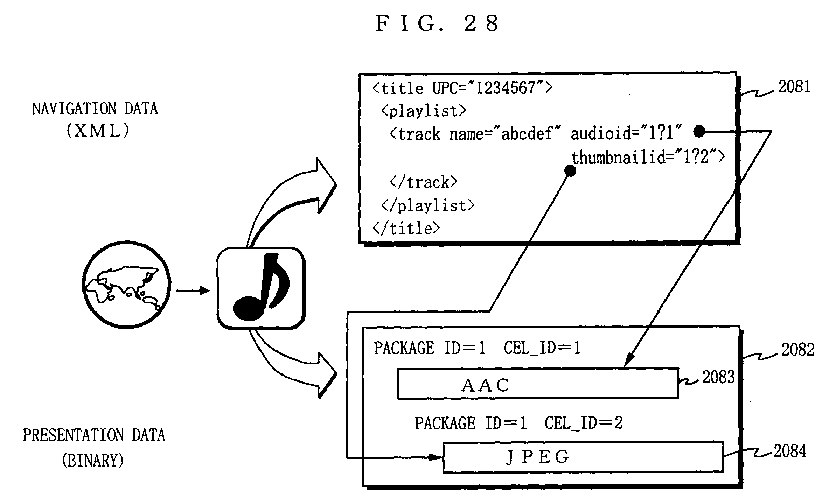

FIG. 28 is a diagram showing how to refer to the CEL from the navigation data by using the CEL locator. In FIG. 28, navigation data 2081 and presentation data 2082 are shown as an example. The presentation data 2082 includes an audio CEL 2083 encoded with MPEG2-AAC and an image CEL 2084 encoded with JPEG. The package ID and CEL_ID of the audio CEL 2083 are both 1, while those of the image CEL 2084 are 1 and 2, respectively. In this case, a CEL locator "1?1" included in the navigation data 2081 indicates the audio CEL 2083 with its package ID "1" and CEL_ID "1". A CEL locator "1?2" indicates the image CEL 2084 with its package ID "1" and CEL_ID "2". As known from this example, only a change in the package ID of the CEL locator after creation of the SDAF title can cause a change in the structure of the SDAF package. Therefore, it is possible to structure the SDAF title as a single package or split the SDAF title into a plurality of SDAF packages.

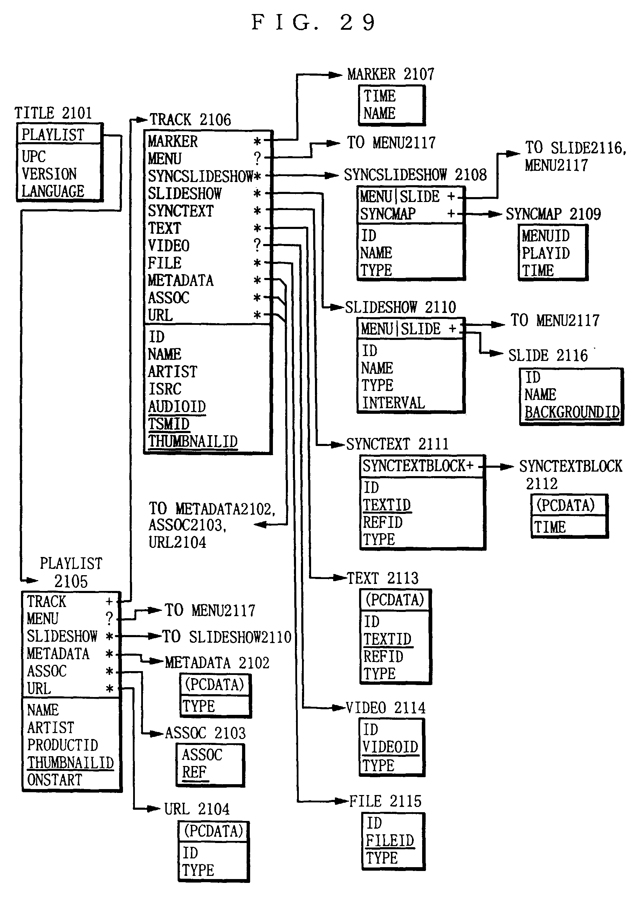

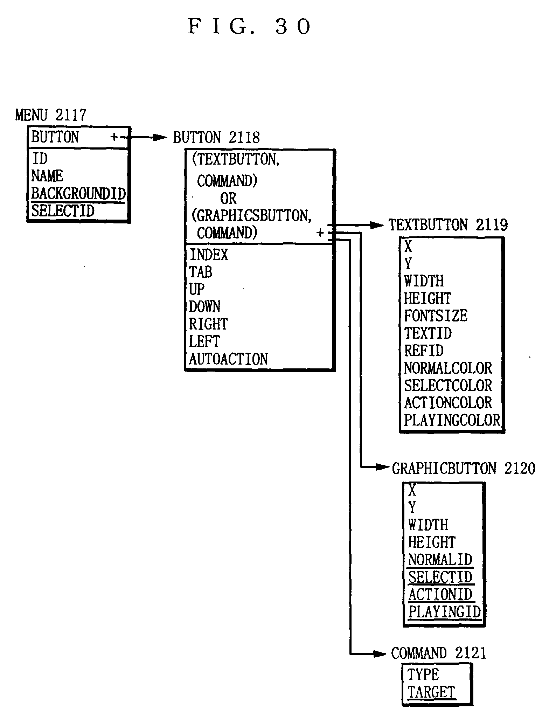

FIGS. 29 and 30 are diagrams showing the structure of the navigation data based on the following representation manner. Each rectangle represents an element of the navigation data. An arrow drawn from an element A to an element B indicates that the element A includes the element B as a descendant element. Each mark provided at the start of each arrow indicates as follows: * indicates that the element includes 0 or more descendant elements; + indicates that the element includes 1 or more descendant elements; and ? indicates that the element includes 0 or 1 descendant element. If the element A includes an item P without any arrow, that means the element A has the item P as an attribute. Underlined items represent CEL locators. PCDATA represents a character string composed of characters included in a predetermined character set. This representation specifies a hierarchical structure with a TITLE element as a root.

A TITLE element 2101 describes shipping information of the SDAF title. This element has three attributes: UPC, VERSION, and LANGUAGE. The UPC attribute describes a UPC (Universal Product Code), which is the international standards of product codes. The VERSION attribute describes the version number of the SDAF navigation structure. The LANGUAGE attribute describes the type of language according to ISO 639. Its default value is "en" indicating English.

A METADATA element 2102 describes information such as genre of a PLAYLIST or TRACK element. The METADATA element has a TYPE attribute. The TYPE attribute describes the type of the METADATA element.

An ASSOC element 2103 describes reference information to a CEL included in other SDAF titles. This element has a REF attribute. The REF attribute describes the CEL locator.

A URL element 2104 describes the URL (Uniform Resource Locator). This element has two attributes: ID and TYPE. The ID attribute describes the identification number of this element. The TYPE attribute describes the type of the URL element.

A PLAYLIST element 2105 describes a playlist, which is a basic unit for the SDAF title. The playlist corresponds to an album in the conventional package media, and is included in all SDAF titles. The PLAYLIST element may include a MENU element, which is a menu for the playlist. The PLAYLIST element has five attributes: NAME, ARTIST, PRODUCTID, THUBMNAILID, and ONSTART. The NAME attribute describes the name of the playlist. The PRODUCTID attribute describes information corresponding to a catalog code in a CD. The THUMBNAILID attribute describes the CEL locator of the image CEL that is typical in the playlist. The ONSTART attribute describes the operation for playing back the playlist. If the ONSTART attribute is "MENU", the player stops playing while displaying a playlist menu. If "TRACK", the player starts playing back the first TRACK element included in the PLAYLIST element. All PLAYLIST elements have at least one TRACK element 2106.

The TRACK element 2106 describes the track including one audio CEL. The TRACK element may include a track menu, slideshow, text, file, and others. The TRACK element has seven attributes: ID, NAME, ARTIST, ISRC, AUDIOID, TSMID, and THUMBAILID. The ID attribute describes the identification number that is unique in the SDAF title. The NAME attribute describes the name of the TRACK element. The ARTIST attribute describes the name of the artist. The ISRC attribute describes ISRC (International Standard Recording Code). The AUDIOID attribute describes the CEL locator of the audio CEL related to the TRACK element. The TSMID attribute describes the CEL locator of a time search map corresponding to the audio CEL. The time search map will be described later. The THUMBNAILID attribute describes the CEL locator of the image CEL that is typical in the TRACK element.

A MARKER element 2107 describes a marker for use in finding the start in the TRACK element. This element has two attributes: TIME and NAME. The TIME attribute describes the location of the marker in milliseconds. The NAME attribute describes the name of the marker.

A SYNCSLIDESHOW element 2108 describes a slideshow for displaying slides or menus by following display timing information specified by a SYNCMAP element 2109. The SYNCSLIDESHOW element 2108 has three attributes: ID, NAME, and TYPE. The ID attribute describes the identification number that is unique in the SDAF title. The NAME attribute describes the name of the slideshow. The TYPE attribute describes the information category in the track, such as credits, lyrics, liner notes, biography, image collection, or promotion.

The SYNCMAP element 2109 describes the display timing information for the slide or the menu specified in the SYNCSLIDESHOW element. The SYNCMAP element 2109 has three attributes: MENUID, PLAYID, and TIME. The MENUID attribute describes the identification number of the slide or menu to be displayed. The PLAYID attribute describes the index number for specifying a button to be set in a playback state on the menu. The TIME attribute describes the display timing in milliseconds.

A SLIDESHOW element 2110 describes the slideshow for displaying slides or menus at predetermined display intervals. This element has four attributes: ID, NAME, TYPE, and INTERVAL. The ID attribute describes the identification number that is unique in the SDAF title. The NAME attribute describes the name of the slideshow. The TYPE attribute describes the information category in the track, such as credits, lyrics, liner notes, biography, image collection, or promotion. The INTERVAL attribute describes the display interval of the slide or menu.

A SYNCTEXT element 2111 describes text information to be displayed with predetermined timing. The text information is described by using a SYNCTEXTBLOCK element 2112. Alternatively, the text information may be specified by referring to part of the text CEL. The SYNCTEXT element has four attributes: ID, TEXTID, REFID, and TYPE. The ID attribute describes the identification number that is unique in the SDAF title. The TEXTID attribute describes the CEL locator of the text CEL. The REFID attribute describes the identification number of a TEXTREF element in the text CEL specified by the TEXTID attribute. The TEXTREF element will be described later. The TYPE attribute describes the information category in the track, such as credits, lyrics, liner notes, biography, image collection, or promotion.

The SYNCTEXTBLOCK element 2112 describes the text information to be displayed with predetermined timing. This element has a TIME attribute. The TIME attribute describes the display timing in milliseconds.

The TEXT element 2113 describes text information. The text information is described in a text data format. Alternatively, the text information may be specified by referring to part of the text CEL. The TEXT element has the same types of attributes as the SYNCTEXT element has.

A VIDEO element 2114 describes any existing video CEL. This element has three attributes: ID, VIDEOID, and TYPE. The ID attribute describes the identification number that is unique in the SDAF title. The VIDEOID attribute describes the CEL locator of the video CEL. The TYPE attribute describes the information category in the track, such as credits, lyrics, liner notes, biography, image collection, or promotion.

A FILE element 2115 describes any existing file CEL. This element has three attributes: ID, FILEID, and TYPE. The ID attribute describes the identification number that is unique in the SDAF title. The FILEID attribute describes the CEL locator of the file CEL. The TYPE attribute describes the information category in the track, such as credits, lyrics, liner notes, biography, image collection, or promotion.

A SLIDE element 2116 describes a slide. This element has three attributes: ID, NAME, and BACKGROUNDID. The ID attribute describes the identification number that is unique in the SDAF title. The NAME attribute describes the name of the slide. The BACKGROUNDID attribute describes the CEL locator of the image CEL on a slide screen.

A MENU element 2117 describes a menu. The menu has one or more onscreen buttons. The MENU element has four attributes: ID, NAME, BACKGROUNDID, and SELECTID. The ID attribute describes the identification number that is unique in the SDAF title. The NAME attribute describes the name of the menu. The BACKGROUNDID attribute describes the CEL locator of the image CEL displayed on a menu screen. The SELECTID attribute describes the index number for specifying a button to be set in a select state.

A BUTTON element 2118 describes the onscreen buttons arranged on the menu screen. The BUTTON element includes, as descendant elements, one or more pairs of TEXTBUTTON and COMMAND elements or those of GRAPHICBUTTON and COMMAND elements. The BUTTON element has seven attributes: INDEX, TAB, UP, DOWN, RIGHT, LEFT, and AUTOACTION. The INDEX attribute describes the index number that is unique in the MENU element. The TAB attribute describes the sequential number sequentially and circulatively provided for each of the buttons on the menu. The UP, DOWN, LEFT, and RIGHT attributes describe the index number of the selected destination button located upward, downward, leftward, and rightward, respectively, from the current button. The AUTOACTION attribute describes the flag indicating whether the state is automatically changed from select to active.

A TEXTBUTTON element 2119 describes the onscreen button represented by text. This element has eleven attributes: X, Y, WIDTH, HEIGHT, FORNTSIZE, NORMALCOLOR, SELECTCOLOR, ACTIONCOLOR, PLAYINGCOLOR, TEXTID, and REFID. The X, Y, WIDTH, and HEIGHT attributes each describe the display location of the button using a coordinate system taking the upper-left corner of the menu as the origin. The FONTSIZE element describes the font size in points. The NORMALCOLOR, SELECTCOLOR, ACTIONCOLOR, and PLAYINGCOLOR attributes describe a display color in RGB format when the button state is normal, select, active, and playback, respectively. The TEXTID attribute describes the CEL locator of an external text CEL. The REFID attribute describes the identification number of the TEXTREF element in the text CEL specified by the TEXTID.

A GRAPHICBUTTON element 2120 describes the onscreen button represented as graphics. This element has eight attributes: X, Y, WIDTH, HEIGHT, NORMALID, SELECTID, ACTIONID, and PLAYINGID. The X, Y, WIDTH, and HEIGHT attributes each describe the display location of the button using a coordinate system taking the upper-left corner of the menu as the origin. The NORMALID, SELECTID, ACTIONID, and PLAYINGID attributes each describes the CEL locator of the image CEL displayed when the button state is normal, select, active, and playback, respectively.

A COMMAND element 2121 describes the navigation operation when the user presses one of the onscreen buttons. This element has two attributes: TYPE and TARGET. The TYPE attribute describes any one of SHOW, FUNCTION, GOTO, NEXT, and PREVIOUS commands. The SHOW command is for displaying the element specified by the TARGET attribute. The FUNCTION command is for executing the element specified by the TARGET attribute. This command is used while a playlist menu is being displayed. The GOTO command is for moving from the element currently displayed to a specified brother element. The NEXT command is for moving from the element currently displayed to the next brother element. The PREVIOUS element is for moving from the element currently displayed to the previous brother element. The TARGET attribute describes the parameter of the command specified by the TYPE attribute. If the SHOW command is specified, the TARGET attribute describes the identification number of the element to be displayed. If the FUNCTION command is specified, the TARGET attribute describes the identification number of the element to be executed. If the GOTO command is specified, the TARGET attribute describes the identification number of the brother element of the element currently displayed.

The TEXTREF element describes text category information for use in referring from the navigation data to part of the text data stored in the text CEL. The text data included in the TEXTREF element is referred to by specifying the identification number of the TEXTREF element from the navigation data. The TEXTREF attribute has an ID attribute. The ID attribute describes the identification number that is unique in the SDAF tittle.

Next, the CEL 2013 is described. The CEL has five types: audio, image, video, text, and file. In SDAF, the data format and parameter are specified for each type of the CEL.

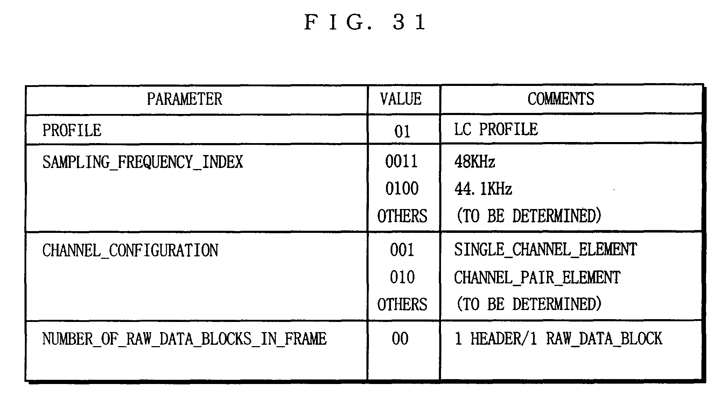

The data included in the audio CEL is audio data encoded in compliance with MPEG2-AAC (Advanced Audio Coding) [Low Complexity Profile]. Note that MPEG2-AAC is specified in ISO/IEC 13818-7: 1997(E) Information technology - Generic coding of moving pictures and associated audio information - Part7 Advanced Audio Coding (AAC). The bit stream encoded with MPEG2-AAC is assumed to be in the ADTS (Audio Data Transport Stream) format. Further, parameters described in ISO/IEC 13818-7 are restricted as shown in FIG. 31. Of these parameters, parameters other than sampling_frequency_index and channel_configuration are restricted due to selection of LC-profile specified by ISO/IEC 13818-7. Further, the average bit rate is 64 or 128 kbps.

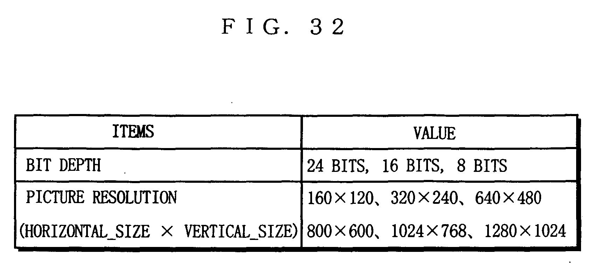

Data included in the image CEL is image data encoded in compliance with JPEG, MPEG-I frame, or PNG (Portable Network Graphics). FIGS. 32, 33, and 34 are tables showing specification of JPEG, MPEG-I frame, and PNG, respectively. The specifications for the encryption algorithms applied to the image CEL are restricted as shown in these figures.

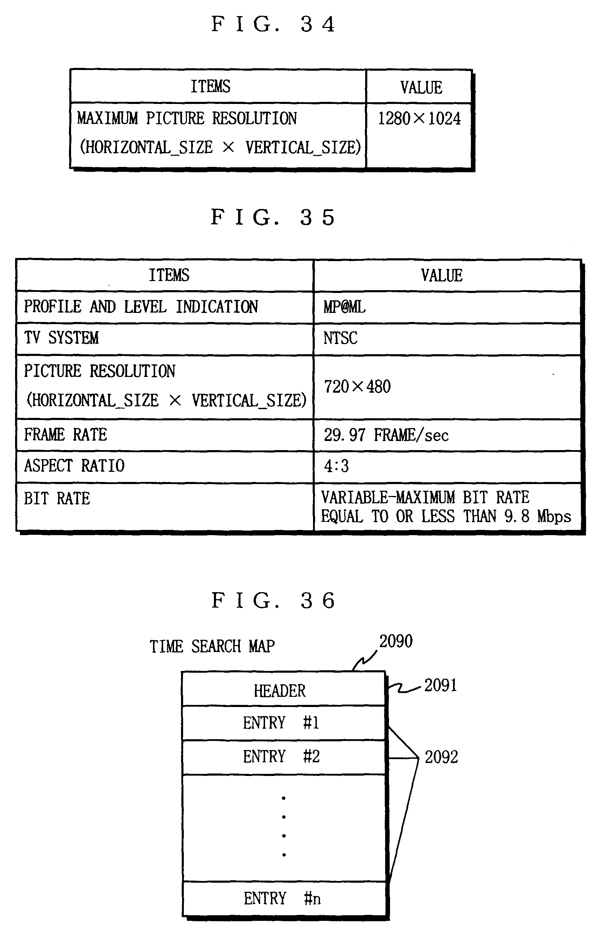

Data included in the video CEL is video data encoded in compliance with MPEG2. FIG. 35 is a table showing the specification of MPEG 2. The specification for the encryption algorithm applied to the video CEL is restricted as shown in FIG. 35.

Data included in the text CEL is PLAIN text or XML text in SDAF. The encryption type is Unicode or music shift JIS.

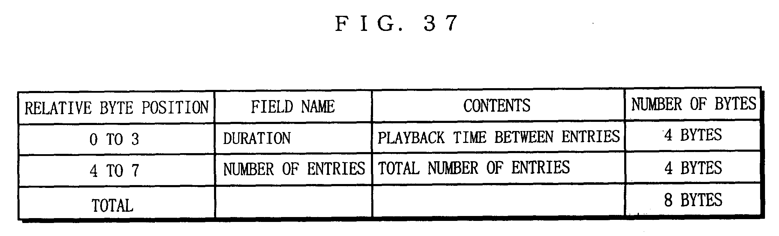

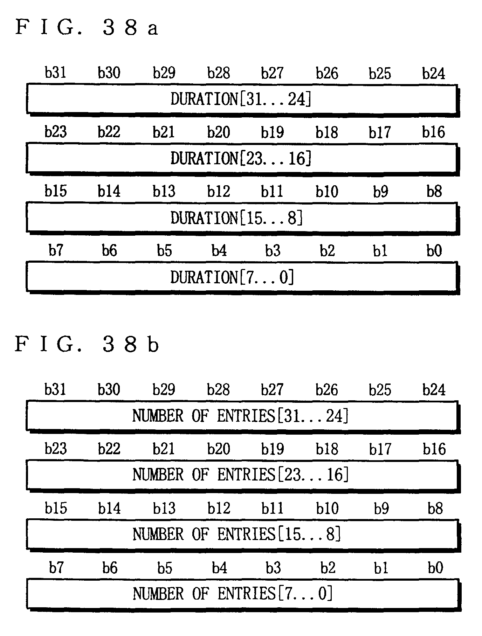

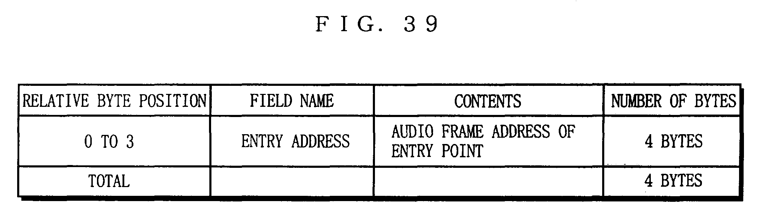

As an example of the file CEL, a time search map CEL that includes a time search map as data is now described. The time search map is a table composed of address of an audio frame. FIG. 36 is a diagram showing the structure of the time search map. As shown in FIG. 36, a time search map 2090 is composed of a header 2091 and a plurality of entries 2092. FIGS. 37, 38a, and 38b are a table and diagrams showing the header 2091 in detail. As shown in FIGS. 37, 38a, and 38b, the header 2091 includes playback duration between entries described in milliseconds and the total number of entries. FIG. 39 is a table showing each entry in detail. As shown in FIG. 39, each entry includes the address of the audio frame at its entry point. The first entry indicates the starting location of the audio frame included in the audio CEL.

Note that in the present embodiment, MPEG2-AAC is used for compressing music data included in the audio CEL. Alternatively, MP3 (MPEG1 Audio Layer 3), Dolby-AC3, or DTS (Digital Theater System) may be used.

Next, with reference to FIGS. 40 to 45, how to use the SDAF is described. As stated above, the SDAF is a format for describing multimedia contents, and mainly used for music data distribution. The SDAF can be applied to various types of recording media, typically hard disks, optical disks such as DVD-RAM, and semiconductor memory such as memory cards.

In addition to music data distribution, the SDAF can be used in combination with the existing music data. For example, to be mentioned below, the SDAF can be used in combination with music data complying with the DVD-Audio standards. Similarly, the SDAF can be applied to other recording media such as DVD-Video, CD, Video-CD, and Photo CD.

Music data complying with the DVD-Audio standards includes LPCM (Linear Pulse Code Modulation) audio contents and MPEG-I frame image contents. A player complying with the DVD-Audio standards displays a menu screen for user's interactive operation. In the DVD-Audio standards, such menu screen is displayed by superimposing a maximum of four-color sub video images onto a background image for display and providing a plurality of rectangular regions in the sub video images. Such rectangular regions are called buttons, and each button is assigned a command. However, some restrictions are applied to the number of display colors and the shape of the button and therefore the content creator cannot freely design the menu screen.

This problem can be solved by previously recording data of the menu screen described in the SDAF in a conventional DVD-Audio disk, and displaying the menu screen using this data at playback. More specifically, the DVD-Audio disk records multimedia contents described in the SDAF and a CEL redirector for referring from the SDAF to the original DVD-Audio contents. Hereinafter, a DVD-Audio disk with such data recorded thereon is called an extended DVD-Audio disk, and a player for playing back the extended DVD-Audio disk is called SDAF-compliant DVD-Audio player.

FIG. 40 is a diagram showing an example of the CEL redirectors that correspond to a single DVD-Audio disk. Each row indicates the CEL redirector for each content included in the original DVD-Audio disk. The CEL redirector includes a CEL_ID 2201, file name 2202, start address 2203, and end address 2204. The CEL_ID 2201 is a content identifier that is unique in the disk. The file name 2202 is a name of the file that includes each content. The start and end addresses 2203 and 2204 are offset values indicating the start location and end location, respectively, of each content in the file. The CEL redirector is recorded in a file named DVDA.MAP, for example, in an SDAF directory provided in the ROM area of the extended DVD-Audio disk.

All various playback control functions such as audio playback order control, slideshow image playback, and a menu function defined by the DVD-Audio standards can be described using the SDAF navigation data. For example, the menu function can be realized by superimposing JPEG button images having any number of colors and shape onto an MPEG-I frame background image for display and relating each button region to a command.

When playback control information included in the DVD-Audio disk is converted into SDAF navigation data, information indicating a content is converted into the CEL_ID by using the CEL redirector. The menu screen is converted into JPEG button images. The obtained images are arranged at locations so as to be superimposed onto the background image. The navigation data and button images as obtained in the above described manner are stored in a single SDAF package, and recorded in a file named SDAF.SDP, for example, in an SDAF directory provided in the ROM region of the extended DVD-Audio disk. The method of playing back the extended DVD-Audio disk will be described later.

Next, an SDAF player for playing back multimedia contents described with SDAF is described below. The SDAF player plays back distributed music data in the following manner. First, the player searches for the package IDs and navigation information to collect the CEL_IDs of the CELs required for playback. The player searches purchase database using sets of the collected package ID and CEL_ID to determine whether each CEL has been purchased or not. If any CEL not yet purchased is found, the player analyzes the encoded offer, and pays a predetermined price through the existing electronic distribution system. After purchasing, the key pair stored in the offer is stored in the purchase database. If determining that the SDAF package required for playback is not found in the player, the player sends out the package ID to the data distribution apparatus. The data distribution apparatus distributes an SDAF package with the received package ID to the player. After purchasing all CELs required for playback, the player decrypts the CELs using the key pairs stored in the purchase database for playback. At this time, the player interprets the navigation data for playback control.

The SDAF title is distributed to the player as being split into one or more SDAF packages. FIGS. 41a to 41c are diagrams showing examples how to distribute the SDAF packages. In a distribution method as shown in FIG. 41a, a package 2301 includes only an audio content, while a package 2302 includes only an image or video graphic content. Moreover, from the package 2302, the audio content included in the package 2301 is referred to. Therefore, the user who purchased only the package 2301 can play back only the audio content. The user who purchased the package 2302 in addition to the package 2301 can play back the graphic content together with the audio content. As such, the SDAF title may be specified by adding a CEL to the existing track.

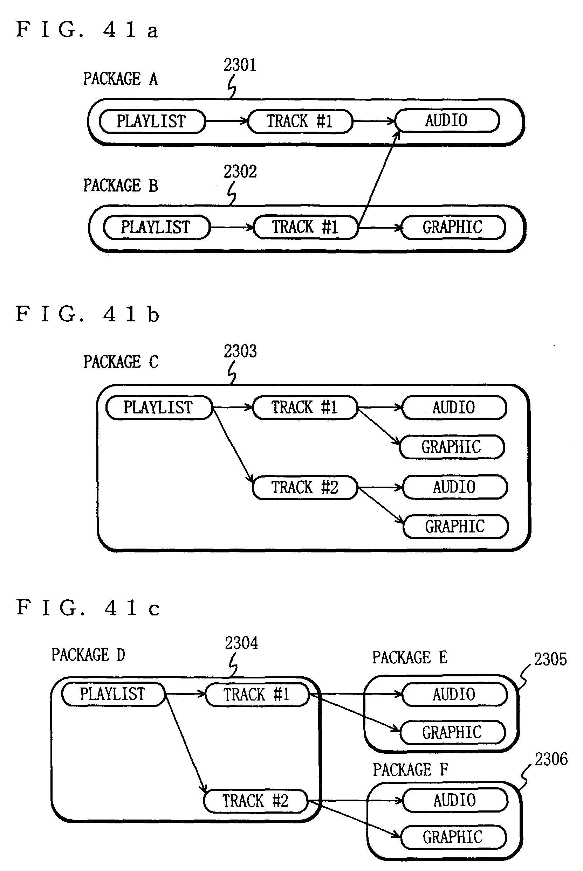

In a distribution method as shown in FIG. 41b, a package 2303 includes a plurality of audio contents and graphic contents. As such, a single package may include all CELs included in the SDAF title.

In a distribution method as shown in FIG. 41c, a single SDAF title is split into packages 2304, 2305, and 2306 for distribution. The package 2305 includes a content for Track #1, while the package 2306 includes a content for Track #2. In this distribution method, it is possible to select either one of the packages 2305 and 2306 for distribution.

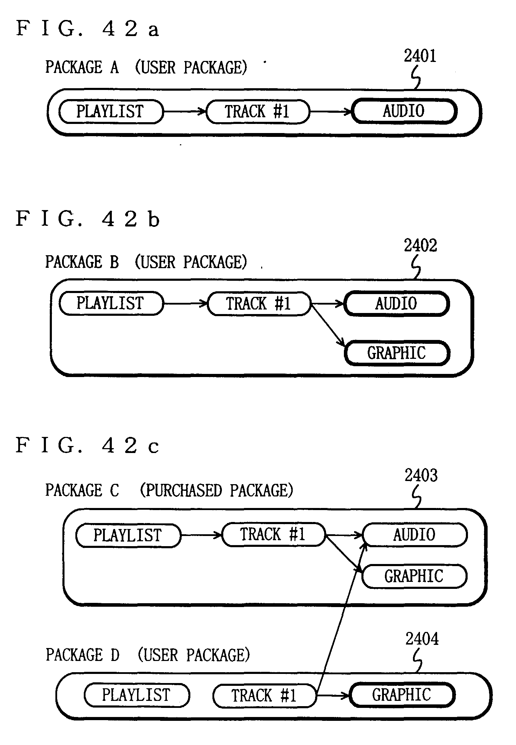

Moreover, in the player, a new SDAF package including a content owned by the user may be created. FIGS. 42a to 42c are diagrams showing examples how to create SDAF packages. In FIGS. 42a to 42c, a user package is an SDAF package created by the user, while a purchased package is a distributed SDAF package. Contents surrounded by a thick line are owned by the user. It is assumed herein that the user owns data read from a CD, that is, an audio content ripped from the CD, and a graphic content created by himself/herself.

As shown in FIG. 42a, the user may create a package 2401 including the audio content owned by himself/herself. Furthermore, as shown in FIG. 42b, the user may create a package 2402 including the audio and graphic contents owned by himself/herself. Still further, as shown in FIG. 42c, the user may create a package 2404 from which the audio content included in the purchased package 2403 is referred to. If the package 2404 is played back, the audio content included in the purchased package and the graphic content owned by the user are played back. Therefore, the image included in the purchased package can be changed to the image created by the user, or a new image created by the user can be added to the purchased package.

Next, the SDAF-compliant DVD-Audio player for playing back the extended DVD-Audio disk is described. The player controls playback operation by following the navigation data described with SDAF instead of the original playback control information complying with the DVD-Audio standards. The player reads the navigation data and the CEL locator from the extended DVD-Audio disk, and operates by following the read navigation data. If the original audio content or image content is referred to from the navigation data, the player refers to the CEL locator to obtain information about the location in which the content is stored, and plays back the content. The player reads the background image from the DVD-Audio region on the disk and the button images from the SDAF data, and combines them to display the menu screen.

As such, with the use of the extended DVD-Audio disk, the existing DVD-Audio player can carry out conventional playback, while the SDAF-compliant DVD-Audio player can display the menu screen by using the navigation data described with SDAF.

In the above description, the SDAF package and CEL redirector are stored in the disk. Alternatively, such data may be downloaded through a network to the player. This method can be applied to CDs and DVD disks that have already been sold to the user. Furthermore, with this method, the CELs that are accessible through a communication network can be referred to by using the URL.

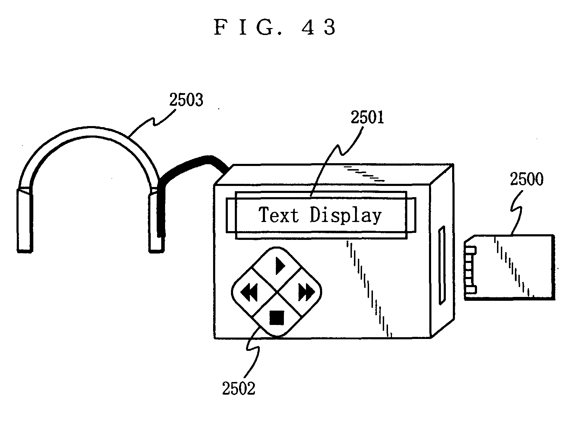

Next, a data conversion apparatus for copying multimedia contents specified in SDAF to an external storage medium for portable music players is described. Here, the portable music player is structured by using semiconductor memory as an external storage medium, and characterized by its small size, light weight, and capability of writing data therein at high speed. The portable music player includes, as shown in FIG. 43, a liquid crystal display 2501 capable of displaying text, a control panel 2502 for controlling audio playback, and a headphone 2503 for audio output. Furthermore, a memory card 2500 for storing audio data can be removably attached to the portable music player. The portable music player plays back audio contents complying with MPEG2-AAC, and also displays text information. However, the data recording format of the memory card is not SDAF, but a unique format.

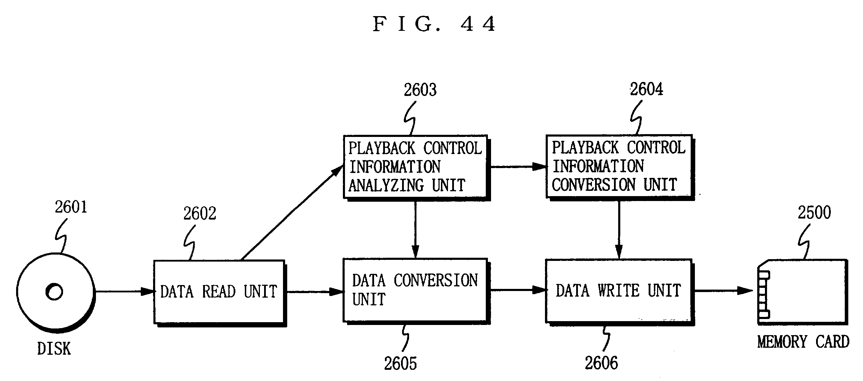

FIG. 44 is a block diagram showing the structure of the data conversion apparatus for converting contents recorded on an extended DVD-Audio disk into a predetermined format, and writing the converted contents in a memory card for portable music players. In FIG. 44, it is assumed that an LPCM-format audio content, an image content in MPEG-I frame format, playback control information described with SDAF, and additional text information are recorded in a disk 2601.

In the data conversion apparatus shown in FIG. 44, a data read unit 2602 reads the playback control information from the disk 2601, and provides the same to a playback control information analyzing unit 2603. The playback control information analyzing unit 2603 analyzes the read playback control information to examine whether the content recorded on the disk 2601 can be played back or requires conversion.

Next, the data read unit 2602 sequentially reads, from the disk 2601, contents that can be played back by the portable music player, and provides the read contents to a data conversion unit 2605. At this time, contents that cannot be played back by the portable music player is not read. The data conversion unit 2605 converts the read contents according to the type of a memory card 2500. For example, text information that can be directly played back by the portable music player such as titles is not converted. On the other hand, LPCM-format audio contents are converted into MPEG2-AAC format so that the portable music player can play back the contents.

The playback control information conversion unit 2604 generates playback control information for the portable music player based on the playback control information analyzed by the playback control information analyzing unit 2603. A data write unit 2606 writes the playback control information generated by the playback control information conversion unit 2604 and the contents converted by the data conversion unit 2605 in the memory card 2500.

Note that, the data conversion unit shown in FIG. 44 may convert arbitrary contents other than audio contents into a predetermined format and write the converted contents in the memory card 2500. Furthermore, the data recording format of the memory card may be an arbitrary format other than SDAF. Still further, for supporting a plurality of external storage media, the data conversion apparatus may include the data conversion unit, playback control information conversion unit, and data write unit for each external storage medium.

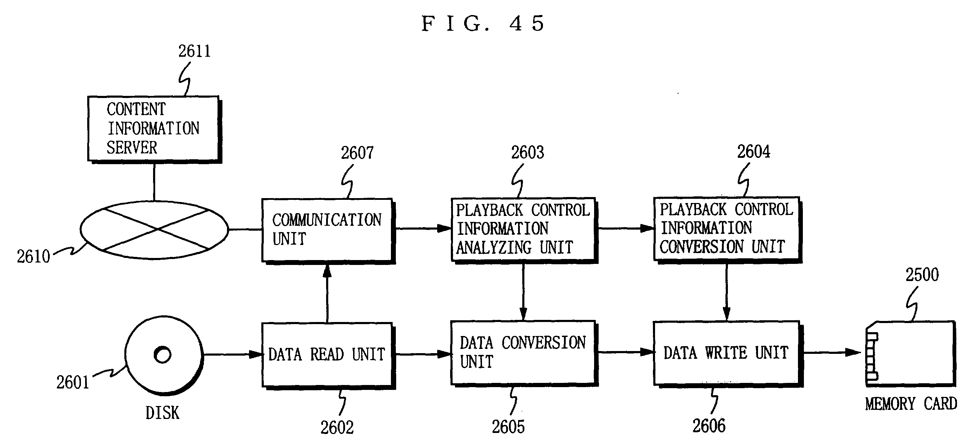

Moreover, if no navigation data described with SDAF is recorded on the disk 2601, as shown in FIG. 45, lacking data may be obtained through a communication network. In FIG. 45, it is assumed that an identification number is recorded in the disk 2601. For example, the identification number of a music CD is a catalog code, ISRC code, and others.

The data read unit 2602 reads the identification number of the disk, and provides the same to a communication unit 2607. The communication unit 2607 communicates with a content information server 2611 through a communication network 2610. The communication unit 2607 may access to the content information server 2611 through the Internet, or may directly access the content information server 2611 through a telephone circuit. The content information server 2611 stores the lacking data in relation to the identification number, and in response to a request from a data conversion apparatus, sends the lacking data to the data conversion apparatus. After receiving the lacking data, the data conversion apparatus carries out the same operation as the data conversion apparatus as shown in FIG. 44.

As stated above, the content distribution format SDAF according to the present embodiment is a format for describing multimedia contents, and mainly used for music data distribution. Also, using the SDAF in combination with the existing music data can extend the function of the existing music data.

Note that, as known from the comparison between FIGS. 3 and 18, the correlation between the music data described in the first to third embodiments and the SDAF according to the present embodiment is as follows. That is, the header 40 shown in FIG. 3 corresponds to the header 2011 shown in FIG. 18. The navigation information 41 shown in FIG. 3 corresponds to the navigation data 2012 shown in FIG. 18. The content 42 shown in FIG. 3 corresponds to the CEL 2013 shown in FIG. 18. The billing information 43 shown in FIG. 3 corresponds to the offer 2014 shown in FIG. 18.

While the invention has been described in detail, the foregoing description is in all aspects illustrative and not restrictive. It is understood that numerous other modifications and variations can be devised without departing from the scope of the invention.

### (Fourth Embodiment)

As the fourth embodiment, as a specific example of copyrighted data as mentioned in the first to third embodiments, a content distribution format called SDAF (Secure Digital Audio Format) is described below. Referring to FIGS. 18 to 39, details on the SDAF is first described, and then referring to FIGS. 40 to 45, how to use the SDAF is described.

The content distribution format (SDAF) according to the present embodiment is used for describing multimedia contents that include audio, images, video, text, and file data. The multimedia contents described with SDAF are herein called an SDAF title. Presentation data each comprising the SDAF title is herein called a content element (hereinafter abbreviated as CEL). Each CEL is assigned a CEL identifier that is unique in the SDAF title (hereinafter abbreviated as CEL_ID).

The SDAF title is distributed as being split into units called SDAF packages. Each SDAF package is assigned a package identifier that is unique in the entire distribution system. FIG. 18 is a diagram showing an example of the SDAF package. As shown in FIG. 18, an SDAF title 2000 is composed of a plurality of SDAF packages. Each package 2001 is composed of a header 2011, navigation data 2012, a plurality of CELs 2013, and an offer 2014.

The header 2011 includes information such as location, size, and attribute of each data in the package. Such information defines the package structure. The navigation data 2012 is playback control information specifying the operation of the player in playing back the SDAF title. From the navigation data 2012, a CEL included in the package to which the navigation data belong or in other packages is referred to. The CEL 2013 is obtained by encrypting each presentation data composing the SDAF title, and more specifically, by encrypting audio, images, video, text, or file data. A pair of a decryption key for decrypting the CEL 2013 and CEL_ID is called a key pair. The offer 2014 includes a plurality of key pairs, and purchase rules describing the purchase price and available period for each key pair.

FIGS. 19a to 19c are diagrams showing three types of SDAF packages. A full package 2001 shown in FIG. 19c includes, similarly to FIG. 18, a header 2011, navigation data 2012, a plurality of CELs 2013, and an offer 2014. An offer package 2002 shown in FIG. 19a includes the header 2011, the navigation data 2012, and the offer 2014, but does not include any CEL 2013. A CEL package 2003 shown in FIG. 19b includes the header 2011 and the plurality of CELs 2013. Since the navigation data 2012 is required for playing back the SDAF title, the full package 2001 and the offer package 2002 can be played back alone, but the CEL package 2003 cannot.

The CEL package is used for splitting the SDAF title according to the distribution channel. For example, when distributed by using a CD-ROM, the SDAF title is recorded as a full package in the CD-ROM. On the other hand, when distributed through the Internet, the SDAF title is split into one full package and a plurality of CEL packages for distribution. For example, the SDAF title is split into one full package including an audio CEL and a plurality of CEL packages including a video CEL that is referred to from the full package for distribution.

Further, as shown in FIG. 20, the SDAF title may be split into a plurality of SDAF packages by tracks. In package division as shown in FIG. 20, an SDAF title 2020 including audio data for five tracks is split into three packages 2021 to 2023. The first to third packages 2021 to 2023 have package names Single1, Single2, and album, respectively. The first and second packages 2021 and 2022 both include an audio CEL for one track and navigation data for controlling playback of the CEL. The third package 2023 includes an audio CEL for three tracks and navigation data for controlling playback of all audio CELs included in the first to third packages 2021 to 2023. As such, by dividing the SDAF title into a plurality of SDAF packages, it is possible to make each data size smaller and easily handle each data.

The header, offer, navigation data, and CEL, which compose the SDAF package, are described in this order below.

The header 2011 is first described. Here, an SDAF package shown in FIG. 21 is taken as an example, and a header 2031 of an SDAF package 2030 is described. In the SDAF package 2030, it is herein assumed that the size of navigation data 2032 and the size of an offer 2034 are 400H each, in hexadecimal notation. This package includes three CELs 2033, and the types thereof are, from first, audio, image, and file. It is assumed here in that the sizes of these CELs are, from first, 400000H, 18000H, and 8000H in hexadecimal notation.

FIG. 22 is a diagram showing the structure of the header 2031. In the header 2031, data as described below is sequentially stored, and the size of the header is BCH in hexadecimal notation. Note that the structure of the header 2031 can be described in the C++ language as shown in FIGS. 23 and 24. FIGS. 23 and 24 are a diagram showing a sequential source code as being split into two, and before division, a source code 2062 shown in FIG. 24 follows a source code 2061 shown in FIG. 23.

At the start of the header 2031, a magic number 2041 (4 bytes) indicating that the file is in the SDAF format is stored. The value of the magic number 2041 is a character string "SDAF". Then, a version number 2042 (4 bytes) of the SDAF is stored. Then, a package ID 2043 (16 bytes) and a package size 2044 (4 bytes) are stored. Then, navigation data location information 2045 (SDAF_LOCATION_NAV in FIG. 23), offer location information 2046 (SDAF_LOCATION_OFFER in FIG. 23), and the number of CELs in the package 2047 are stored. Then, CEL information 2048 (SDAF_LOCATION_CEL in FIG. 24) for each CEL is stored. Lastly, a CEL attribute table 2049 indicating an attribute of each CEL is stored.

The navigation data location information 2045 indicates the location and size of the navigation data 2032. The offer location information 2046 indicates the location and size of the offer 2034. These two pieces of information are both composed of an offset (4 bytes) from the start of the SDAF package and each size (4 bytes) thereof.

The CEL information 2048 is composed of a CEL_ID 2051 (16 bytes), a CEL type 2052 (2 bytes), a CEL encryption type 2053 (2 bytes), a CEL data location information 2054, and a CEL attribute table location information 2055. The CEL_ID 2051 is a content element identifier that is unique in the SDAF title. The CEL type 2052 takes any value of audio, image, video, text, and file. The CEL encryption type 2053 indicates an algorithm used for encrypting the CEL. The CEL data location information 2054 and CEL attribute table location information 2055 are both composed of an offset (4 bytes) from the start of the SDAF package and each size (4 bytes) thereof. If the offset or size is 0, that means no data exists.

The CEL attribute table 2049 is a list of attributes specified for each CEL type. An audio CEL attribute table (SADF_ATTR_AUDIO in FIG. 24) includes at least CODEC, the number of quantized bits, sampling frequency, and the number of audio channels. An image CEL attribute table (SDAF_ATTR_GRAPHIC in FIG. 24) includes at least the height and width of the image and the encryption type. A video CEL attribute table includes at least the height and width of the video and the encryption type. A text attribute table includes at least the encryption type of the text, such as Unicode or music shift JIS (Japanese Industrial Standards). A file CEL attribute table includes at least the type of MIME (Multipurpose Internet Message Extension).

The CEL attribute table 2049 is defined not as a fixed-length table but with a variable-length tag structure as shown in FIGS. 25a to 25c. If the tag structure is used, a tag length and tag ID are stored preceding the data, as shown in FIG. 25a. For example, the image CEL attribute table is composed of a characteristic tag 2063 and an encryption type tag 2064. The table elements are specified by using the tag structure, thereby a new table element can be added to the data format or the data format can be changed only by adding a tag. The CEL attribute table is specified by using the tag structure with a great potential for expansion.

Next, the offer 2014 is described. As stated above, the offer includes a plurality of key pairs and purchase rules for each key pair. Each key pair is composed of a decryption key for decrypting the CEL and a CEL_ID. FIG. 26 is a diagram showing the correspondence between the key pair and the CEL. As shown in FIG. 26, a key pair 2072 is composed of a decryption key 2073 and a CEL_ID 2074, and each key pair 2072 is related to each CEL 2071. The offer includes not only the key pair of the CEL included in the SDAF package but also all key pairs of the CELs included in the SDAF packages of the same SDAF title. In other words, when one SDAF title is split into a plurality of SDAF packages, only one SDAF package includes an offer, and this offer includes all key pairs of the CELs included in the SDAF title.

The purchase rules are described by using a language for describing use conditions of the key pair, called right management language. The use conditions of the key pair include the date of purchase, use period, and whether a specific CEL or SDAF title has been purchased or not. The purchase rules are specified by using these use conditions, and thereby the same CEL can be sold at different prices depending on the conditions.

Next, the navigation data 2012 is described. The navigation data is created by a content creator so that the user can use the CEL most effectively, defining the logic structure of the SDAF title.

In SDAF, XML (eXtensible Markup Language), which is a tag description language in a text format, is used for describing the navigation data. When the data structure is described in XML, a tag structure in a text format is used. Therefore, data described in XML is redundant compared with binary data. Nevertheless, XML is adopted because of its excellent expandability.

To refer to the CEL from the navigation data, a CEL locator is used. The CEL locator is a concatenation of the package ID and CEL_ID taking '?' (question mark) as a delimiter. However, for the CEL included in the SDAF package that includes the navigation data, the package ID and the delimiter are omitted, and the CEL_ID becomes the CEL locator. The CEL locator can specify the CEL independently of the physical address of the CEL.

FIG. 28 is a diagram how to refer to the CEL from the navigation data by using the CEL locator. In FIG. 28, navigation data 2081 and presentation data 2082 are shown as an example. The presentation data 2082 includes an audio CEL 2083 encoded with MPEG2-AAC and an image CEL 2084 encoded with JPEG. The package ID and CEL_ID of the audio CEL 2083 are both 1, while those of the image CEL 2084 are 1 and 2, respectively. In this case, a CEL locator "1?1" included in the navigation data 2081 indicates the audio CEL 2083 with its package ID "1" and CEL_ID "1". A CEL locator "1?2" indicates the image CEL 2084 with its package ID "1" and CEL_ID "2". As known from this example, only a change in the package ID of the CEL locator after creation of the SDAF title can cause a change in the structure of the SDAF package. Therefore, it is possible to structure the SDAF title as a single package or split the SDAF title into a plurality of SDAF packages.

FIGS. 29 and 30 are diagrams showing the structure of the navigation data based on the following representation manner. Each rectangle represents an element of the navigation data. An arrow drawn from an element A to an element B indicates that the element A includes the element B as a descendant element. Each mark provided at the start of each arrow indicates as follows: * indicates that the element includes 0 or more descendant elements; + indicates that the element includes 1 or more descendant elements; and ? indicates that the element includes 0 or 1 descendant element. If the element A includes an item P without any arrow, that means the element A has the item P as an attribute. Underlined items represent CEL locators. PCDATA represents a character string composed of characters included in a predetermined character set. This representation specifies a hierarchical structure with a TITLE element as a root.

A TITLE element 2101 describes shipping information of the SDAF title. This element has three attributes: UPC, VERSION, and LANGUAGE. The UPC attribute describes a UPC (Universal Product Code), which is the international standards of product codes. The VERSION attribute describes the version number of the SDAF navigation structure. The LANGUAGE attribute describes the type of language according to ISO 639. Its default value is "en" indicating English.

A METADATA element 2102 describes information such as genre of a PLAYLIST or TRACK element. The METADATA has a TYPE attribute. The TYPE attribute describes the type of the METADATA element.

An ASSOC element 2103 describes reference information to a CEL included in other SDAF title. This element has a REF attribute. The REF attribute describes the CEL locator.

A URL element 2104 describes the URL (Uniform Resource Locator). This element has two attributes: ID and TYPE. The ID attribute describes the identification number of this element. The TYPE attribute describes the type of the URL element.

A PLAYLIST element 2105 describes a playlist, which is a basic unit for the SDAF title. The playlist corresponds to an album in the conventional package media, and included in all SDAF titles. The PLAYLIST element may include a MENU element, which a menu for the playlist. The PLAYLIST element has five attributes: NAME, ARTIST, PRODUCTID, THUBMNAILID, and ONSTART. The NAME attribute describes the name of the playlist. The PRODUCTID attribute describes information corresponding to a catalog code in a CD. The THUMBNAILID attribute describes the CEL locator of the image CEL that is typical in the playlist. The ONSTART attribute describes the operation for playing back the playlist. If the ONSTART attribute is "MENU", the player stops playing while displaying a playlist menu. If "TRACK", the player starts playing back the first TRACK element included in the PLAYLIST element. All PLAYLIST elements have at least one TRACK element 2106.

The TRACK element 2106 describes the track including one audio CEL. The TRACK element may include a track menu, slideshow, text, file, and others. The TRACK element has seven attributes: ID, NAME, ARTIST, ISRC, AUDIOID, TSMID, and THUMBAILID. The ID attribute describes the identification number that is unique in the SDAF title. The NAME attribute describes the name of the TRACK element. The ARTIST attribute describes the name of the artist. The ISRC attribute describes ISRC (International Standard Recording Code). The AUDIOID attribute describes the CEL locator of the audio CEL related to the TRACK element. The TSMID attribute describes the CEL locator of a time search map corresponding to the audio CEL. The time search map will be described later. The THUMBNAILID attribute describes the CEL locator of the image CEL that is typical in the TRACK element.

A MARKER element 2107 describes a marker for use in finding the start in the TRACK element. This element has two attributes: TIME and NAME. The TIME attribute describes the location of the marker in milliseconds. The NAME attribute describes the name of the marker.

A SYNCSLIDESHOW element 2108 describes a slideshow for displaying a slide or menu by following display timing information specified by a SYNCMAP element 2109. The SYNCSLIDESHOW element 2108 has three attributes: ID, NAME, and TYPE. The ID attribute describes the identification number that is unique in the SDAF title. The NAME attribute describes the name of the slideshow. The TYPE attribute describes the information category in the track, such as credits, lyrics, liner notes, biography, image collection, or promotion.

The SYNCMAP element 2109 describes the display timing information for the slide or the menu specified in the SYNCSLIDESHOW element. The SYNCMAP element 2109 has three attributes: MENUID, PLAYID, and TIME. The MENUID attribute describes the identification number of the slide or menu to be displayed. The PLAYID attribute describes the index number for specifying a button to be set in a playback state on the menu. The TIME attribute describes the display timing in milliseconds.

A SLIDESHOW element 2110 describes the slideshow for displaying slides or menu at predetermined display intervals. This element has four attributes: ID, NAME, TYPE, and INTERVAL. The ID attribute describes the identification number that is unique in the SDAF title. The NAME attribute describes the name of the slideshow. The TYPE attribute describes the information category in the track, such as credits, lyrics, liner notes, biography, image collection, or promotion. The INTERVAL attribute describes the display interval of the slide or menu.

A SYNCTEXT element 2111 describes text information to be displayed with predetermined timing. The text information is described by using a SYNCTEXTBLOCK element 2112. Alternatively, the text information may be specified by referring to part of the text CEL. The SYNCTEXT element has four attributes: ID, TEXTID, REFID, and TYPE. The ID attribute describes the identification number that is unique in the SDAF title. The TEXTID attribute describes the CEL locator of the text CEL. The REFID attribute describes the identification number of a TEXTREF element in the text CEL specified by the TEXTID attribute. The TEXTREF element will be described later. The TYPE attribute describes the information category in the track, such as credits, lyrics, liner notes, biography, image collection, or promotion.

The SYNCTEXTBLOCK element 2112 describes the text information to be displayed with predetermined timing. This element has a TIME attribute. The TIME attribute describes the display timing in milliseconds.

The TEXT element 2113 describes text information. The text information is described in a text data format. Alternatively, the text information may be specified by referring to part of the text CEL. The TEXT element has the same types of attributes as those of the SYNCTEXT element.

A VIDEO element 2114 describes any existing video CEL. This element has three attributes: ID, VIDEOID, and TYPE. The ID attribute describes the identification number that is unique in the SDAF title. The VIDEOID attribute describes the CEL locator of the video CEL. The TYPE attribute describes the information category in the track, such as credits, lyrics, liner notes, biography, image collection, or promotion.

A FILE element 2115 describes any existing file CEL. This element has three attributes: ID, FILEID, and TYPE. The ID attribute describes the identification number that is unique in the SDAF title. The FILEID attribute describes the CEL locator of the file CEL. The TYPE attribute describes the information category in the track, such as credits, lyrics, liner notes, biography, image collection, or promotion.

A SLIDE element 2116 describes a slide. This element has three attributes: ID, NAME, and BACKGROUNDID. The ID attribute describes the identification number that is unique in the SDAF title. The NAME attribute describes the name of the slide. The BACKGROUNDID attribute describes the CEL locator of the image CEL on a slide screen.

A MENU element 2117 describes a menu. The menu has one or more onscreen buttons. The MENU element has four attributes: ID, NAME, BACKGROUNDID, and SELECTID. The ID attribute describes the identification number that is unique in the SDAF title. The NAME attribute describes the name of the menu. The BACKGROUNDID attribute describes the CEL locator of the image CEL displayed on a menu screen. The SELECTID attribute describes the index number for specifying a button to be set in a select state.

A BUTTON element 2118 describes the onscreen buttons arranged on the menu screen. The BUTTON element includes, as descendant elements, one or more pairs of TEXTBUTTON and COMMAND elements or those of GRAPHICBUTTON and COMMAND elements. The BUTTON element has seven attributes: INDEX, TAB, UP, DOWN, RIGHT, LEFT, and AUTOACTION. The INDEX attribute describes the number that is unique in the MENU element. The TAB attribute describes the sequential number sequentially provided for each of the buttons on the menu. The UP, DOWN, LEFT, and RIGHT attributes describe the index number of the selected destination button located upward, downward, leftward, and rightward, respectively, from the current button. The AUTOACTION attribute describes the flag indicating whether the state is automatically changed from select to active.

The TEXTBUTTON element 2119 describes the onscreen button represented by text. This element has eleven attributes: X, Y, WIDTH, HEIGHT, FORNTSIZE, NORMALCOLOR, SELECTCOLOR, ACTIONCOLOR, PLAYINGCOLOR, TEXTID, and REFID. The X, Y, WIDTH, and HEIGHT attributes each describe the display location of the button using a coordinate system taking the upper-left corner of the menu as the origin. The FONTSIZE element describes the font size in points. The NORMALCOLOR, SELECTCOLOR, ACTIONCOLOR, and PLAYINGCOLOR attributes describe a display color in RGB format when the button state is normal, select, active, and playback, respectively. The TEXTID attribute describes the CEL locator of an external text CEL. The REFID attribute describes the identification number of the TEXTREF element in the text CEL specified by the TEXTID.

The GRAPHICBUTTON element 2120 describes the onscreen button represented as graphics. This element has eight attributes: X, Y, WIDTH, HEIGHT, NORMALID, SELECTID, ACTIONID, and PLAYINGID. The X, Y, WIDTH, and HEIGHT attributes each describe the display location of the button using a coordinate system taking the upper-left corner of the menu as the origin. The NORMALID, SELECTID, ACTIONID, and PLAYINGID attributes each describes the CEL locator of the image CEL displayed when the button state is normal, select, active, and playback, respectively.

The COMMAND element 2121 describes the navigation operation when the user presses one of the onscreen buttons. This element has two attributes: TYPE and TARGET. The TYPE attribute describes any one of SHOW, FUNCTION, GOTO, NEXT, and PREVIOUS commands. The SHOW command is for displaying the element specified by the TARGET attribute. The FUNCTION command is for executing the element specified by the TARGET attribute. This command is used while a playlist menu is being displayed. The GOTO command is for moving from the element currently displayed to a specified brother element. The NEXT command is for moving from the element currently displayed to the next brother element. The PREVIOUS element is for moving from the element currently displayed to the previous brother element. The TARGET attribute describes the parameter of the command specified by the TYPE attribute. If the SHOW command is specified, the TARGET attribute describes the identification number of the element to be displayed. If the FUNCTION command is specified, the TARGET attribute describes the identification number of the element to be executed. If the GOTO command is specified, the TARGET attribute describes the identification number of the brother element of the element currently displayed.

The TEXTREF element describes text category information for use in referring from the navigation data to part of the text data stored in the text CEL. The text data included in the TEXTREF element is referred to by specifying the identification number of the TEXTREF element from the navigation data. The TEXTREF attribute has an ID attribute. The ID attribute describes the identification number that is unique in the SDAF tittle.

Next, the CEL 2013 is described. The CEL has five types: an audio CEL, image CEL, video CEL, text CEL, and file CEL. In SDAF, the data format and parameter are specified for each type of the CEL.

The data included in the audio CEL is audio data encoded as complying with MPEG2-AAC (Advanced Audio Coding) [Low Complexity Profile]. Note that MPEG2-AAC is specified in ISO/IEC 13818-7: 1997(E) Information technology - Generic coding of moving pictures and associated audio information - Part7 Advanced Audio Coding (AAC). The bit stream encoded with MPEG2-AAC is assumed to be in the ADTS (Audio Data Transport Stream) format. Further, parameters described in ISO/IEC 13818-7 are restricted as shown in FIG. 31. Of these parameters, parameters other than sampling_frequency_index and channel_configuration are restricted due to selection of LC-profile specified by ISO/IEC 13818-7. Further, the average bit rate is 64 or 128 kbps.

Data included in the image CEL is image data encoded as complying with JPEG, MPEG-I frame, PNG (Portable Network Graphics). FIGS. 32, 33 and 34 are tables showing specification of JPEG, MPEG-I frame and PNG. The specifications for the encryption algorithms applied to the image CEL are restricted as shown in these drawings.

Data included in the video CEL is video data encoded as complying with MPEG2. FIG. 35 is a table showing the specification of MPEG 2. The specification for the encryption algorithm applied to the video CEL is restricted as shown in FIG. 35.

Data included in the text CEL is PLAIN text or XML text in SDAF. The encryption type is Unicode or music shift JIS.

As an example of the file CEL, a time search map CEL that includes a time search map as data is now described. The time search map is a table composed of address of an audio frame. FIG. 36 is a diagram showing the structure of the time search map. As shown in FIG. 36, a time search map 2090 is composed of a header 2091 and a plurality of entries 2092. FIGS. 37, 38a, and 38b are a table and diagrams showing the header 2091 in detail. As shown in FIGS. 37, 38a, and 38b, the header 2091 includes playback time between entries described in milliseconds and the total number of entries. FIG. 39 is a table showing each entry in detail. As shown in FIG. 39, each entry includes the address of the audio frame at its entry point. The first entry indicates the starting location of the audio frame included in the audio CEL.

Note that in the present embodiment, MPEG2-AAC is used for compressing music data included in the audio CEL. Alternatively, MP3 (MPEG1 Audio Layer 3), Dolby-AC3, or DTS (Digital Theater System) may be used.

Next, with reference to FIGS. 40 to 45, how to use the SDAF is described. As stated above, the SDAF is a format for describing multimedia contents, and mainly used for music data distribution. The SDAF can be applied to various types of recording media, typically hard disks, optical disks such as DVD-RAM, and semiconductor memory such as memory cards.

In addition to music data distribution, the SDAF can be used in combination with the existing music data. For example, as will mentioned below, the SDAF can be used in combination with music data complying with the DVD-Audio standards. Similarly, the SDAF can be applied to other recording media such as DVD-Video, CD, Video-CD, and Photo CD.

Music data complying with the DVD-Audio standards includes LPCM (Linear Pulse Code Modulation) audio contents and MPEG-I frame image contents. A player complying with the DVD-Audio standards displays a menu screen for user's interactive operation. In the DVD-Audio standards, such menu screen is displayed by superimposing a maximum of four sub video images onto a background image for display and providing a plurality of rectangular regions in the sub video images. Such rectangular regions are called buttons, and each button is assigned a command. However, some restrictions are applied to the number of display colors and shape of the button and therefore the content creator cannot freely design the menu screen.

This problem can be solved by previously recording data of the menu screen described in the SDAF in a conventional DVD-Audio disk, and displaying the menu screen using this data at playback. More specifically, multimedia contents described in the SDAF and a CEL redirector for referring from the SDAF to the original DVD-Audio contents. Hereinafter, a DVD-Audio disk with such data recorded thereon is called an extended DVD-Audio disk, and a player for playing back the extended DVD-Audio disk is called SDAF-compliant DVD-Audio player.

FIG. 40 is a diagram showing an example of the CEL redirectors that corresponds to a single DVD-Audio disk. Each row indicates the CEL redirector for each content included in the original DVD-Audio disk. The CEL redirector includes a CEL_ID 2201, file name 2202, start address 2203, and end address 2204. The CEL_ID 2201 is a content identifier that is unique in the disk. The file name 2202 is a name of the file that includes each content. The start and end addresses 2203 and 2204 are offset values indicating the start location and end location, respectively, from each content in the file. The CEL redirector is recorded in a file named DVDA.MAP, for example, in an SDAF directory provided in the ROM area of the extended DVD-Audio disk.

All various playback control functions such as audio playback order control, slideshow image playback, and a menu function defined by the DVD-Audio standards can be described using the SDAF navigation data. For example, the menu function can be realized by superimposing JPEG button images having any number of colors and shape onto an MPEG-I frame background image for display and relating each button region to a command.

When playback control information included in the DVD-Audio disk is converted into SDAF navigation data, information indicating a content is converted into the CEL_ID by using the CEL redirector. The menu screen is converted into JPEG button images. The obtained images are arranged at locations so as to be superimposed onto the background image. The navigation data and button images as obtained in the above described manner are stored in a single SDAF package, and recorded in a file named SDAF.SDP, for example, in an SDAF directory provided in the ROM region of the extended DVD-Audio disk. The method of playing back the extended DVD-Audio disk will be described later.

Next, an SDAF player for playing back multimedia contents described with SDAF is described below. The SDAF player plays back distributed music data in the following manner. First, the player searches for the package IDs and navigation information to collect the CEL_IDs of the CELs required for playback. The player searches purchase database using sets of the collected package ID and CEL_ID to determine whether each CEL has been purchased or not. If any CEL not yet purchased is found, the player analyzes the encoded offer, and pays a predetermined price through the existing electronic distribution system. After purchasing, the key pair stored in the offer is stored in the purchase database. If determining that the SDAF package required for playback is not found in the player, the player sends out the package ID to the data distribution apparatus. The data distribution apparatus distributes an SDAF package with the received package ID to the player. After purchasing all CELs required for playback, the player decrypts the CELs using the key pairs stored in the purchase database for playback. At this time, the player interprets the navigation data for playback control.

The SDAF title is distributed to the player as being split into one or more SDAF packages. FIGS. 41a to 41c are diagrams showing examples how to distribute the SDAF packages. In a distribution method as shown in FIG. 41a, a package 2301 includes only an audio content, while a package 2302 includes only an image or video graphic content. Moreover, from the package 2302, the audio content included in the package 2301 is referred to. Therefore, the user who purchased only the package 2301 can play back only the audio content. The user who purchased the package 2302 in addition to the package 2301 can play back the graphic content together with the audio content. As such, the SDAF title may be specified by adding a CEL to the existing track.

In a distribution method as shown in FIG. 41b, a package 2303 includes a plurality of audio contents and graphic contents. As such, a single package may include all CELs included in the SDAF title.

In a distribution method as shown in FIG. 41c, a single SDAF title is split into packages 2304, 2305, and 2306 for distribution. The package 2305 includes a content for Track #1, while the package 2306 includes a content for Track #2. In this distribution method, it is possible to select either one of the packages 2305 and 2306 for distribution.

Moreover, in the player, a new SDAF package including a content owned by the user may be created. FIGS. 42a to 42c are diagrams showing examples how to create SDAF packages. In FIGS. 42a to 42c, a user package is an SDAF package created by the user, while a purchased package is a distributed SDAF package. Contents surrounded by a thick line are owned by the user. It is assumed herein that the user owns data read from a CD, that is, an audio content ripped from the CD, and a graphic content created by himself/herself.

As shown in FIG. 42a, the user may create a package 2401 including the audio content owned by himself/herself. Furthermore, as shown in FIG. 42b, the user may create a package 2402 including the audio and graphic contents owned by himself/herself. Still further, as shown in FIG. 42c, the user may create a package 2404 from which the audio content included in the purchased package 2403 is referred to. If the package 2404 is played back, the audio content included in the purchased package and the graphic content owned by the user are played back. Therefore, the image included in the purchased package can be changed to the image created by the user, or a new image created by the user can be added to the purchased package.

Next, the SDAF-compliant DVD-Audio player for playing back the extended DVD-Audio disk is described. The player controls playback operation by following the navigation data described with SDAF instead of the original playback control information complying with the DVD-Audio standards. The player reads the navigation data and the CEL locator from the extended DVD-Audio disk, and operates by following the read navigation data. If the original audio content or image content is referred to from the navigation data, the player refers to the CEL locator to obtain information about the location in which the content is stored, and plays back the content. The player reads the background image from the DVD-Audio region on the disk and the button images from the SDAF data, and combines them to display the menu screen.

As such, with the use of the extended DVD-Audio disk, the existing DVD-Audio player can carry out conventional playback, while the SDAF-compliant DVD-Audio player can display the menu screen by using the navigation data described with SDAF.

In the above description, the SDAF package and CEL redirector are stored in the disk. Alternatively, such data may be downloaded through a network to the player. This method can be applied to CDs and DVD disks that have already been sold to the user. Furthermore, with this method, the CELs that are accessible through a communication network can be referred to by using the URL.

Next, a data conversion apparatus for copying multimedia contents specified in SDAF to an external storage medium for portable music players is described. Here, the portable music player is structured by using semiconductor memory as an external storage medium, and characterized by its small size, light weight, and capability of writing data therein at high speed. The portable music player includes, as shown in FIG. 43, a liquid crystal display 2501 capable of displaying text, a control panel 2502 for controlling audio playback, and a headphone 2503 for audio output. Furthermore, a memory card 2500 for storing audio data can be removably attached to the portable music player. The portable music player plays back audio contents complying with MPEG2-AAC, and also displays text information. However, the data recording format of the memory card is not SDAF, but a unique format.

FIG. 44 is a block diagram showing the structure of the data conversion apparatus for converting contents recorded on an extended DVD-Audio disk into a predetermined format, and writing the converted contents in a memory card for portable music players. In FIG. 44, it is assumed that an LPCM-format audio content, an image content in MPEG-I frame format, playback control information described with SDAF, and additional text information are recorded in a disk 2601.

In the data conversion apparatus shown in FIG. 44, a data read unit 2602 reads the playback control information from the disk 2601, and provides the same to a playback control information analyzing unit 2603. The playback control information analyzing unit 2603 analyzes the read playback control information to examine whether the content recorded on the disk 2601 can be played back or requires conversion.

Next, the data read unit 2602 sequentially reads, from the disk 2601, contents that can be played back by the portable music player, and provides the read contents to a data conversion unit 2605. At this time, contents that cannot be played back by the portable music player is not read. The data conversion unit 2605 converts the read contents according to the type of a memory card 2500. For example, text information that can be directly played back by the portable music player such as titles is not converted. On the other hand, LPCM-format audio contents are converted into MPEG2-AAC format so that the portable music player can play back the contents.

The playback control information conversion unit 2604 generates playback control information for the portable music player based on the playback control information analyzed by the playback control information analyzing unit 2603. A data write unit 2606 writes the playback control information generated by the playback control information conversion unit 2604 and the contents converted by the data conversion unit 2605 in the memory card 2500.

Note that, the data conversion unit shown in FIG. 44 may convert arbitrary contents other than audio contents into a predetermined format and write the converted contents in the memory card 2500. Furthermore, the data recording format of the memory card may be an arbitrary format other than SDAF. Still further, for supporting a plurality of external storage media, the data conversion apparatus may include the data conversion unit, playback control information conversion unit, and data write unit for each external storage medium.

Moreover, if no navigation data described with SDAF is recorded on the disk 2601, as shown in FIG. 45, lacking data may be obtained through a communication network. In FIG. 45, it is assumed that an identification number is recorded in the disk 2601. For example, the identification number of a music CD is a catalog code, ISRC code, and others.

The data read unit 2602 reads the identification number of the disk, and provides the same to a communication unit 2607. The communication unit 2607 communicates with a content information server 2611 through a communication network 2610. The communication unit 2607 may access to the content information server 2611 through the Internet, or may directly access the content information server 2611 through a telephone circuit. The content information server 2611 stores the lacking data in relation to the identification number, and in response to a request from a data conversion apparatus, sends the lacking data to the data conversion apparatus. After receiving the lacking data, the data conversion apparatus carries out the same operation as the data conversion apparatus as shown in FIG. 44.

As stated above, the content distribution format SDAF according to the present embodiment is a format for describing multimedia contents, and mainly used for music data distribution. Also, using the SDAF in combination with the existing music data can extend the function of the existing music data.

Note that, the correlation between the super distribution data described in the first and second embodiments and the SDAF according to the present embodiment is as follows. That is, the additional information including reproduction control information as to the image data and audio data in the second embodiment corresponds to the navigation data 2012 shown in FIG. 18. The content 205 or audio data 204 shown in FIG. 2 and the image data in the second embodiment correspond to the CEL 2013 shown in FIG. 18. The right management information 203 shown in FIG. 2 corresponds to the offer 2014 shown in FIG. 18.

While the invention has been described in detail, the foregoing description is in all aspects illustrative and not restrictive. It is understood that numerous other modifications and variations can be devised without departing from the scope of the invention.

## Claims

1. A digital data copyright protection system for charging a user appropriate royalties while protecting a copyright of digital data, the system comprising:
a content distribution unit (102) operable to distribute super distribution data including said digital data over a network (104):
a plurality of digital data recording and reproducing apparatuses (1011, 1012, and 1013) interconnected via said network (104), each capable of storing the super distribution data received from said content distribution unit (102), reproducing said digital data, and distributing said super distribution data stored therein to the others; and
a billing processing unit (103) operable to communicate with said digital data recording and reproducing apparatuses (1011, 1012, and 1013) over said network (104), and go through a billing processing for charging said royalties, wherein
said digital data recording and reproducing apparatuses (1011, 1012, and 1013) each
communicate, prior to reproducing said digital data, with said billing processing unit (103) to go through a purchase processing to be ready for said billing processing when receiving the super distribution data from said content distribution unit (102) or the other digital data recording and reproducing apparatuses over said network (104), and
add, prior to distribution, a distributor ID to the super distribution data received from said content distribution unit (102) or the other digital data recording and reproducing apparatuses over said network (104), wherein,
when the super distribution data subjected to the billing processing is provided with said distributor ID, said billing processing unit (103) goes through a bonus processing with respect to a user identified by the distributor ID.

2. A digital data recording and reproducing apparatus (1011) being capable of storing super distribution data including a content which is digital data encrypted under a first system and right management information having a content key used for said first system, and of reproducing said content after going through a purchase processing to be ready for a billing processing by communicating with a billing processing unit (103) connected via a network (104), the apparatus comprising:
super distribution data receiving means (401) operable to externally receive said super distribution data;
super distribution data storage means (402) operable to store said super distribution data;
purchase processing means (412) operable to go through, in response to a user's instruction, said purchase processing to reproduce the content included in the super distribution data stored in said super distribution data storage means (402);
data accessing means (410) operable to extract said super distribution data from said super distribution data storage means (402);
content decrypting means (414) operable to decrypt, when said purchase processing is carried out, the super distribution data stored in said super distribution data storage means (402) under said first system, and extract said content;
reproduction means (415 and 416) operable to reproduce the content extracted by said content decrypting means (414); and
distributor ID adding means (411) operable to encrypt a first user ID which is identification information unique to the apparatus, and add the encrypted first user ID to the super distribution data extracted by said data accessing means (410) for external output.

3. The digital data recording and reproducing apparatus according to claim 2, wherein said right management information is also encrypted under a second system, and
a right management information key used for said second system is stored in a secured region where no user is accessible in a normal manner.

4. The digital data recording and reproducing apparatus (1011) according to claim 2, wherein said distributor ID adding means (411) comprises:
management information acquiring means (504) operable to acquire a state of purchase indicating whether or not the purchase processing has been carried out by said purchase processing means (412);
user ID acquiring means (501) operable to acquire said first user ID stored in a secured region where no user is accessible in a normal manner;
user ID encrypting means (502) operable to add, to the first user ID acquired by said user ID acquiring means (501), the state of purchase acquired by said management information acquiring means (504) for encryption under a predetermined system; and
user ID adding means (503) operable to add the first user ID encrypted by said user ID encrypting means (502) to the super distribution data extracted by said data accessing means (410).

5. The digital data recording and reproducing apparatus (1011) according to claim 2, wherein said purchase processing means (412) comprises:
billing control information extracting means (602) operable to extract billing control information from the super distribution data extracted by said data accessing means (410);
distributor ID extracting means (603) operable to extract a second user ID if included in the super distribution data extracted by said data accessing means (410);
billing processing information generating means (604) operable to add, if any second user ID is extracted by said distributor ID extracting means (602), said second user ID to the billing control information extracted by said billing control information extracting means (603), and generate billing processing information;
billing processing information transmitting means (605) operable to transmit the billing processing information generated by said billing processing information generating means (604) to the billing processing unit (103), which is externally provided; and
transmitter ID transmitting means (606) operable to transmit said first user ID as the transmitter ID to the externally provided billing processing unit (103).

6. The digital data recording and reproducing apparatus (1011) according to claim 2, further comprising:
data reading means (406) operable to read a content which is unencrypted digital data;
right management information acquiring means (403) operable to acquire right management information having the content key for encrypting the content read by said data reading means (406);
content key extracting means (405) operable to extract said content key from the right management information acquired by said right management information acquiring means (403);
data encrypting means (408) operable to encrypt said content under said first system with the content key extracted by said content key extracting means (405); and
right management information adding means (409) operable to add the corresponding right management information to the content encrypted by said data encrypting means (408) for storage in said super distribution data storage means (402).

7. The digital data recording and reproducing apparatus (1011) according to claim 6, further comprising data compressing means (407) operable to compress the content read by said data reading means (406) in a predetermined manner, and input the compressed content into said data encrypting means (408).

8. The digital data recording and reproducing apparatus (1011) according to claim 6, further comprising additional information storage means (1703) operable to store content reproduction control information including information as to control content reproduction and image data added as content; and
data adding means (1702) operable to add said content reproduction information and said image data stored in said additional information storage means (1703) to the corresponding content for output to said data encrypting means (408).

9. A billing processing unit (103) operable to store super distribution data, and from a digital data recording and reproducing apparatus (1011, 1012, or 1013) capable of reproducing a content after a billing processing, receive, over a network(104), billing control information corresponding to said super distribution data, a distributor ID indicating who has distributed said super distribution data, and a transmitter ID corresponding to said digital data recording and reproducing apparatus (1011, 1012, or 1013), the billing processing unit comprising:
billing processing information receiving means (802) operable to receiving said billing control information and said distributor ID;
transmitter authorizing means (803) operable to receive said transmitter ID and identify a transmitter;
billing processing means (804) operable to carry out, according to the billing control information received by said billing processing information receiving means (802), the billing processing with respect to the transmitter identified by said transmitter authorizing means (803); and
bonus processing means (808) operable to carry out a bonus processing for a distributor identified by the distributor ID received by said billing processing information receiving means (802).

10. A digital data recording and reproducing method of storing super distribution data including a content which is digital data encrypted under a first system and right management information having a content key used for said first system, and of reproducing said content after a billing processing, the method comprising:
a super distribution data receiving step of externally receiving said super distribution data;
a purchase processing step of carrying out the billing processing to reproduce the content included in said super distribution data responding to a user's instruction;
a content decrypting step of, when the billing processing is carried out in said purchase processing step, decrypting said super distribution data under said first system, and extracting said content;
a reproducing step of reproducing the content extracted in said content decrypting step; and
a distributor ID adding step of adding, responding to the user's instruction, a first user ID which is unique identification information to said super distribution data for output.

11. A computer readable/writable recording medium being recorded a program to be executed on a computer system capable of storing super distribution data including a content which is digital data encrypted under a first system and right management information having a content key used for said first system, and of reproducing said content after a billing processing, the program achieving a method comprising:
a super distribution data receiving step of externally receiving said super distribution data;
a purchase processing step of carrying out the billing processing to reproduce the content included in said super distribution data responding to a user's instruction;
a content decrypting step of, when the billing processing is carried out in said purchase processing step, decrypting said super distribution data under said first system, and extracting said content;
a reproducing step of reproducing the content extracted in said content decrypting step; and
a distributor ID adding step of encrypting a first user ID which is unique identification information, and adding the first user ID to said super distribution data for output.
